(19)

Europäisches
Patentamt
European
Patent Office
Office européen
des brevets

(11)    **EP 3 240 073 B1**

(12)    **EUROPEAN PATENT SPECIFICATION**

(45) Date of publication and mention
of the grant of the patent:
**11.09.2019   Bulletin 2019/37**

(21) Application number: **14909066.4**

(22) Date of filing: **26.12.2014**

(51) Int Cl.:
**H01M 8/0438** *(2016.01)*      **H01M 8/04537** *(2016.01)*

(86) International application number:
**PCT/JP2014/084566**

(87) International publication number:
**WO 2016/103462 (30.06.2016 Gazette 2016/26)**

(54) **FUEL BATTERY STATE DETECTION DEVICE AND METHOD**

VORRICHTUNG UND VERFAHREN ZUR BESTIMMUNG DES ZUSTANDS EINER
BRENNSTOFFBATTERIE

DISPOSITIF ET PROCÉDÉ DE DÉTECTION D'ÉTAT DE PILE À COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.11.2017   Bulletin 2017/44**

(73) Proprietor: **Nissan Motor Co., Ltd.
Yokohama-shi, Kanagawa 221-0023 (JP)**

(72) Inventor: **AOKI, Tetsuya
Atsugi-shi
Kanagawa 243-0123 (JP)**

(74) Representative: **Grünecker Patent- und
Rechtsanwälte
PartG mbB
Leopoldstraße 4
80802 München (DE)**

(56) References cited:
JP-A- 2005 285 614      JP-A- 2007 066 589
JP-A- 2009 134 924      JP-A- 2009 134 924
JP-A- 2013 008 568      JP-A- 2013 191 362
JP-A- 2013 258 042      JP-A- 2014 053 182
JP-A- 2014 053 182      US-A1- 2011 269 046
US-A1- 2014 295 302

EP 3 240 073 B1

## Description

This invention relates to state detection device and method for fuel cell.

A state detection device for fuel cell is known which measures a voltage value and an impedance value of a fuel cell and detects an internal state of the fuel cell on the basis of these values.

For example, it is proposed in Japanese Patent No. 4640661 to calculate a first impedance in a first frequency region corresponding to an electrolyte membrane resistance and a second impedance in a second frequency region corresponding to the sum of the electrolyte membrane resistance and a catalyst layer resistance and lower than the first frequency region and calculate a water content of a catalyst layer on the basis of a differential impedance between the second and first impedances.

Further, it is described in JP2005-285614A to acquire complex impedances corresponding to a frequency Fi at an intersection with a real axis of a complex impedance curve (Cole-Cole plot) of a fuel cell, a frequency F2 in a first region expressing a reaction resistance (reaction resistance of a cathode electrode) when oxygen reacts and a frequency F3 in a second region expressing a resistance concerning oxygen diffusion and obtain an internal resistance value from the obtained complex impedances.

From JP 2009/134924 A a method is known for evaluating the appropriateness of equivalent circuit models for application in modelling the impedance characteristics of a fuel cell.

US 2011/269046 A1 relates to a method for determining the dryness in a fuel cell wherein the water content a catalyst layer is obtained using a differential impedance measurement.

From JP 2005/285614 A a method is known for diagnosing the deterioration of a fuel cell by monitoring the temporal change of resistance values.

JP 2014/053182 A relates to fuel cell diagnostic apparatus diagnosing the diffusion state of a reaction gas inside a fuel cell. For this purpose, the membrane resistance and the diffusion impedance re obtained from the cell's impedance characteristics.

US 2014/0295302 A1 relates to a fuel cell monitoring device, wherein an impedance is measured at different frequencies and, based thereon, a proton resistance and a gas reaction resistance are determined.

However, it is not possible to grasp each of state quantities of an anode electrode and those of a cathode electrode in Japanese Patent No. 4640661. Further, it is also difficult in JP2005-285614A to individually grasp the state of the anode electrode and that of the cathode electrode since the state of the anode electrode and that of the cathode electrode are mixed in the impedance curve.

The present invention was developed, focusing on such a problem, and aims to provide a state detection device and method for fuel cell capable of individually detecting internal state quantities such as state quantities of an anode electrode and those of a cathode electrode in a fuel cell.

This is achieved by the features of the independent claims.

According to one aspect of the present invention, the present invention provides a state detection device for a fuel cell for generating power upon receiving a supply of anode gas and cathode gas. More specifically, the state detection device includes an impedance acquisition unit configured to acquire a high frequency impedance based on a frequency selected from a high frequency band and a low frequency impedance based on a frequency selected from a low frequency band, the high frequency band including a frequency band which shows responsiveness at least to a state quantity of an anode electrode, the low frequency band including a frequency band which shows responsiveness at least to a state quantity of a cathode electrode, and an internal state quantity estimation unit configured to estimate each of the state quantity of the anode electrode and the state quantity of the cathode electrode by combining the acquired high frequency impedance and low frequency impedance, the state quantity of the anode electrode and the state quantity of the cathode electrode serving as internal states of the fuel cell.

BRIEF DESCRIPTION OF DRAWINGS

FIG. 1 is a perspective view of a fuel cell according to an embodiment of the present invention,
FIG. 2 is a sectional view along II-II of the fuel cell of FIG. 1,
FIG. 3 is a schematic configuration diagram of a fuel cell system according to the embodiment of the present invention,
FIG. 4A is a diagram showing a path of a current flowing in a simplified equivalent circuit model of a fuel cell in the case of applying an alternating-current voltage in a low frequency band,
FIG. 4B is a diagram showing a path of a current flowing in the simplified equivalent circuit model of the fuel cell in the case of applying an alternating-current voltage in a frequency band higher than in the case of FIG. 4A,
FIG. 4C is a diagram showing a path of a current flowing in the simplified equivalent circuit model of the fuel cell in the case of applying an alternating-current voltage in a frequency band higher than in the case of FIG. 4B,

FIG. 4D is a diagram showing a path of a current flowing in the simplified equivalent circuit model of the fuel cell in the case of inputting an alternating-current voltage in a high frequency band,

FIG. 5 is a flow chart showing the flow of state quantity estimation according to one embodiment,

FIG. 6 is a flow chart showing the flow of state quantity estimation according to one embodiment,

FIG. 7 is a graph showing I-V characteristic curves of the fuel cell respectively in steady time and in unsteady time,

FIG. 8 is a flow chart showing the flow of state quantity estimation according to one embodiment,

FIG. 9 shows frequency responses of candidates for an electrical double layer capacitance of a cathode electrode,

FIG. 10A shows frequency responses of candidates for an electrical double layer capacitance of an anode electrode,

FIG. 10B shows frequency responses of candidates for a reaction resistance value of the anode electrode 112,

FIG. 11 is a flow chart showing the flow of state quantity estimation according to one embodiment,

FIG. 12 shows an I-V characteristic curve of the fuel cell 1 in steady time,

FIG. 13 is a graph showing an example of a method for setting a set of current and voltage for the calculation of a gradient $\Delta V/\Delta I$ in the I-V characteristic curve, and

FIG. 14 is a block diagram schematically showing a main part relating to an impedance measurement in a fuel cell system according to one embodiment.

DESCRIPTION OF EMBODIMENTS

Hereinafter, embodiments of the present invention are described with reference to the drawings and the like.

A fuel cell is configured such that an electrolyte membrane is sandwiched by an anode electrode serving as a fuel electrode and a cathode electrode serving as an oxidant electrode. The fuel cell generates power using anode gas containing hydrogen and supplied to the anode electrode and cathode gas containing oxygen and supplied to the cathode electrode. Electrode reactions which proceed in both anode and cathode electrodes are as follows.

Anode electrode:

$$2H_2 \rightarrow 4H^+ + 4e \ldots \qquad (1)$$

Cathode electrode:

$$4H^+ + 4e + O_2 \rightarrow 2H_2O \ldots \qquad (2)$$

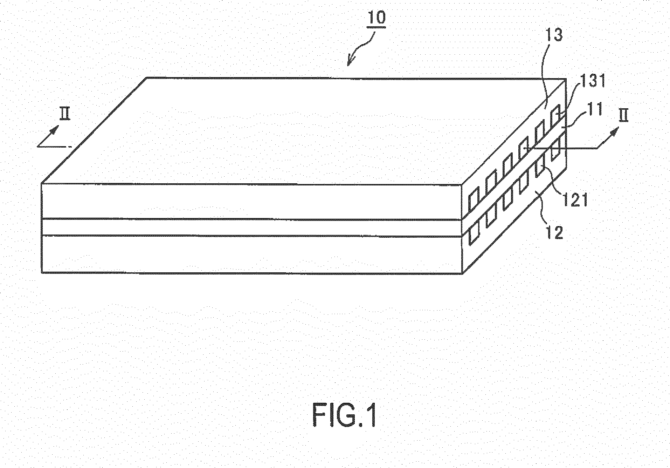

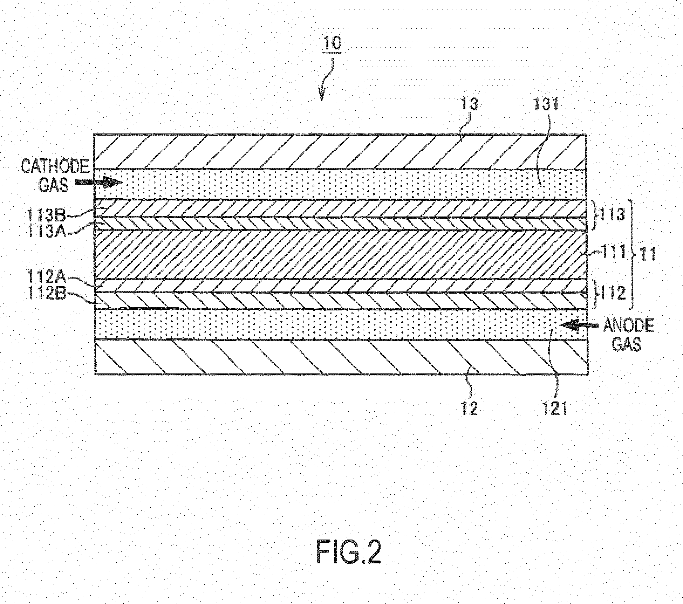

FIGS. 1 and 2 are views showing the configuration of a fuel cell 10 according to one embodiment of the present invention. FIG. 1 is a perspective view of the fuel cell 10. FIG. 2 is a sectional view along II-II of the fuel cell 10 of FIG. 1.

As shown in FIGS. 1 and 2, the fuel cell 10 includes a membrane electrode assembly (MEA) 11, and an anode separator 12 and a cathode separator 13 arranged to sandwich the MEA 11.

The MEA 11 is composed of an electrolyte membrane 111, an anode electrode 112 and a cathode electrode 113. The MEA 11 includes the anode electrode 112 on one surface side of the electrolyte membrane 111 and the cathode electrode 113 on the other surface side.

The electrolyte membrane 111 is a proton conductive ion exchange membrane formed of fluororesin. The electrolyte membrane 111 exhibits good electrical conductivity in a wet state. It should be noted that another material such as a material having a phosphoric acid ($H_3PO_4$) impregnated in a predetermined matrix may be used according to a possible response of a fuel cell.

The anode electrode 112 includes a catalyst layer 112A and a gas diffusion layer 112B. The catalyst layer 112A is a member formed of platinum or carbon black particles carrying platinum or the like and provided in contact with the electrolyte membrane 111. The gas diffusion layer 112B is provided on an outer side of the catalyst layer 112A. The gas diffusion layer 112B is a member formed of carbon cloth having gas diffusion property and electrical conductivity and provided in contact with the catalyst layer 112A and the anode separator 12.

Similarly to the anode electrode 112, the cathode electrode 113 also includes a catalyst layer 113A and a gas diffusion layer 113B. The catalyst layer 113A is arranged between the electrolyte membrane 111 and the gas diffusion layer 113B and the gas diffusion layer 113B is arranged between the catalyst layer 113A and the cathode separator 13.

The anode separator 12 is arranged on an outer side of the gas diffusion layer 112B. The anode separator 12 includes a plurality of anode gas flow passages 121 for supplying anode gas (hydrogen gas) to the anode electrode 112. The anode gas flow passages 121 are formed as groove-like passages.

The cathode separator 13 is arranged on an outer side of the gas diffusion layer 113B. The cathode separator 13 includes a plurality of cathode gas flow passages 131 for supplying cathode gas (air) to the cathode electrode 113. The cathode gas flow passages 131 are formed as groove-like passages.

The anode separator 12 and the cathode separator 13 are so configured that the anode gas flowing in the anode gas flow passages 121 and the cathode gas flowing in the cathode gas flow passages 131 flow in directions opposite to each other. It should be noted that the anode separator 12 and the cathode separator 13 may be so configured that these gases flow in the same direction.

In the case of using such a fuel cell 10 as a power source for an automotive vehicle, a fuel cell stack in which several hundreds of fuel cells 10 are laminated is used since required power is large. Power for driving the vehicle is taken out by configuring a fuel cell system for supplying anode gas and cathode gas to the fuel cell stack. It should be noted that although an impedance measurement to be described later is conducted for each fuel cell stack in which the fuel cells 10 are laminated in the present embodiment, the impedance measurement may be conducted for each fuel cell 10 or for each part (e.g. several tens of cells) of the fuel cell stack.

Further, in the fuel cell stack, an anode electrode, a cathode electrode and an electrolyte membrane serving as sums are configured by arranging the anode electrodes 112, the cathode electrodes 113 and the electrolyte membranes 111 of a plurality of the fuel cells 10 in series. However, for the convenience of description, these anode electrode, cathode electrode and electrolyte membrane serving as the sums are also denoted by the same reference signs as the anode electrode 112, the cathode electrode 113 and the electrolyte membrane 111 of the single cell.

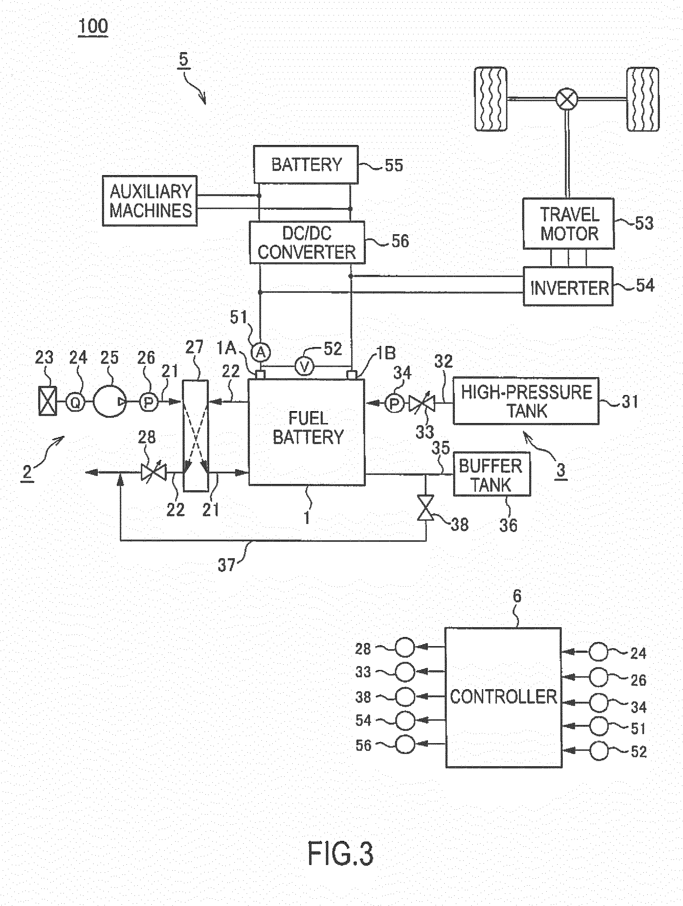

FIG. 3 is a schematic diagram of a fuel cell system 100 according to one embodiment of the present invention.

The fuel cell system 100 includes a fuel cell 1, a cathode gas supplying/discharging device 2, an anode gas supplying/discharging device 3, a power system 5 and a controller 6.

The fuel cell 1 is a laminated battery formed by laminating a plurality of fuel cells 10 (unit cells) as described above. The fuel cell 1 generates power necessary to drive a vehicle upon receiving the supply of the anode gas and the cathode gas. The fuel cell 1 includes an anode electrode side terminal 1A and a cathode electrode side terminal 1B as output terminals for taking out power.

The cathode gas supplying/discharging device 2 supplies the cathode gas to the fuel cell 1 and discharges cathode off-gas discharged from the fuel cell 1 to outside. The cathode gas supplying/discharging device 2 includes a cathode gas supply passage 21, a cathode gas discharge passage 22, a filter 23, an air flow sensor 24, a cathode compressor 25, a cathode pressure sensor 26, a water recovery device (WRD) 27 and a cathode pressure control valve 28.

The cathode gas supply passage 21 is a passage in which the cathode gas to be supplied to the fuel cell 1 flows. One end of the cathode gas supply passage 21 is connected to the filter 23 and the other end is connected to a cathode gas inlet part of the fuel cell 1.

The cathode gas discharge passage 22 is a passage in which the cathode off-gas discharged from the fuel cell 1 flows. One end of the cathode gas discharge passage 22 is connected to a cathode gas outlet part of the fuel cell 1 and the other end is formed as an opening end. The cathode off-gas is mixture gas containing the cathode gas, steam produced by the electrode reaction and the like.

The filter 23 is a member for removing dust, dirt and the like contained in the cathode gas to be taken into the cathode gas supply passage 21.

The cathode compressor 25 is provided downstream of the filter 23 in the cathode gas supply passage 21. The cathode compressor 25 supplies the cathode gas in the cathode gas supply passage 21 to the fuel cell 1 by feeding the cathode gas under pressure.

The air flow sensor 24 is provided between the filter 23 and the cathode compressor 25 in the cathode gas supply passage 21. The air flow sensor 24 detects a flow rate of the cathode gas to be supplied to the fuel cell 1.

The cathode pressure sensor 26 is provided between the cathode compressor 25 and the WRD 27 in the cathode gas supply passage 21. The cathode pressure sensor 26 detects a pressure of the cathode gas to be supplied to the fuel cell 1. The cathode gas pressure detected by the cathode pressure sensor 26 represents a pressure of an entire cathode system including the cathode gas flow passages of the fuel cell 1 and the like.

The WRD 27 is connected over the cathode gas supply passage 21 and the cathode gas discharge passage 22. The WRD 27 is a device for recovering moisture in the cathode off-gas flowing in the cathode gas discharge passage 22 and humidifying the cathode gas flowing in the cathode gas supply passage 21 with that recovered moisture.

The cathode pressure control valve 28 is provided downstream of the WRD 27 in the cathode gas discharge passage 22. The cathode pressure control valve 28 is controlled to open and close by the controller 6 and adjusts the pressure of the cathode gas to be supplied to the fuel cell 1.

Next, the anode gas supplying/discharging device 3 is described.

The anode gas supplying/discharging device 3 supplies the anode gas to the fuel cell 1 and discharges anode off-gas discharged from the fuel cell 1 to the cathode gas discharge passage 22. The anode gas supplying/discharging device 3 includes a high-pressure tank 31, an anode gas supply passage 32, an anode pressure control valve 33, an anode pressure sensor 34, an anode gas discharge passage 35, a buffer tank 36, a purge passage 37 and a purge valve 38.

The high-pressure tank 31 is a container for storing the anode gas to be supplied to the fuel cell 1 in a high-pressure state.

The anode gas supply passage 32 is a passage for supplying the anode gas discharged from the high-pressure tank 31 to the fuel cell 1. One end of the anode gas supply passage 32 is connected to the high-pressure tank 31 and the other end is connected to an anode gas inlet part of the fuel cell 1.

The anode pressure control valve 33 is provided downstream of the high-pressure tank 31 in the anode gas supply passage 32. The anode pressure control valve 33 is controlled to open and close by the controller 6 and adjusts the pressure of the anode gas to be supplied to the fuel cell 1.

The anode pressure sensor 34 is provided downstream of the anode pressure control valve 33 in the anode gas supply passage 32. The anode pressure sensor 34 detects a pressure of the anode gas to be supplied to the fuel cell 1. The anode gas pressure detected by the anode pressure sensor 34 represents a pressure of an entire anode system including the buffer tank 36, the anode gas flow passages of the fuel cell 1 and the like.

The anode gas discharge passage 35 is a passage in which the anode off-gas discharged from the fuel cell 1 flows. One end of the anode gas discharge passage 35 is connected to an anode gas outlet part of the fuel cell 1 and the other end is connected to the buffer tank 36. The anode off-gas contains the anode gas not used in the electrode reaction, impurity gas such as nitrogen having leaked from the cathode gas flow passages 131 to the anode gas flow passages 121, moisture and the like.

The buffer tank 36 is a container for temporarily storing the anode off-gas flowing from the anode gas discharge passage 35. The anode off-gas pooled in the buffer tank 36 is discharged to the cathode gas discharge passage 22 through the purge passage 37 when the purge valve 38 is opened.

The purge passage 37 is a passage for discharging the anode off-gas. One end of the purge passage 37 is connected to the anode gas discharge passage 35 and the other end is connected to a part of the cathode gas discharge passage 22 downstream of the cathode pressure control valve 28.

The purge valve 38 is provided in the purge passage 37. The purge valve 38 is controlled to open and close by the controller 6 and controls a purge flow rate of the anode off-gas discharged from the anode gas discharge passage 35 to the cathode gas discharge passage 22.

When a purge control is executed to open the purge valve 38, the anode off-gas is discharged to outside through the purge passage 37 and the cathode gas discharge passage 22. At this time, the anode off-gas is mixed with the cathode off-gas in the cathode gas discharge passage 22. By mixing the anode off-gas and the cathode off-gas and discharging the mixture gas to outside in this way, an anode gas concentration (hydrogen concentration) in the mixture gas is set at a value not larger than a discharge allowable concentration.

The power system 5 includes a current sensor 51, a voltage sensor 52, a travel motor 53, an inverter 54, a battery 55 and a DC/DC converter 56.

The current sensor 51 detects an output current extracted from the fuel cell 1. The voltage sensor 52 detects an output voltage of the fuel cell 1, i.e. an inter-terminal voltage between the anode electrode side terminal 1A and the cathode electrode side terminal 1B. The voltage sensor 52 may be configured to detect a voltage of each fuel cell 10 or may be configured to detect a voltage of each group composed of a plurality of the fuel cells 10.

The travel motor 53 is a three-phase alternating-current synchronous motor and a drive source for driving wheels. The travel motor 53 has a function serving as a motor to be rotationally driven upon receiving the supply of power from the fuel cell 1 and the battery 55 and a function serving as a generator for generating power by being rotationally driven by an external force.

The inverter 54 is composed of a plurality of semiconductor switches such as IGBTs. The semiconductor switches of the inverter 54 are switching-controlled by the controller 6, thereby converting direct-current power into alternating-current power or alternating-current power into direct-current power. The inverter 54 converts composite direct-current power of output power of the fuel cell 1 and output power of the battery 55 into three-phase alternating-current power and supplies this power to the travel motor 53 when the travel motor 53 is caused to function as the motor. In contrast, the inverter 54 converts regenerative power (three-phase alternating-current power) of the travel motor 53 into direct-current power and supplies this power to the battery 55 when the travel motor 53 is caused to function as the generator.

The battery 55 is configured to be charged with a surplus of the output power of the fuel cell 1 and the regenerative power of the travel motor 53. The power charged into the battery 55 is supplied to the travel motor 53 and auxiliary machines such as the cathode compressor 25 if necessary.

The DC/DC converter 56 is a bidirectional voltage converter for increasing and decreasing the output voltage of the fuel cell 1. By controlling the output voltage of the fuel cell 1 by the DC/DC converter 56, the output current of the fuel cell 1 and the like are adjusted.

The controller 6 is configured by a microcomputer including a central processing unit (CPU), a read-only memory (ROM), a random access memory (RAM) and an input/output interface (I/O interface). To the controller 6 are input signals from sensors such as an accelerator stroke sensor (not shown) for detecting a depressed amount of an accelerator pedal besides signals from various sensors such as the current sensor 51 and the voltage sensor 52.

The controller 6 adjusts the pressures and flow rates of the anode gas and the cathode gas to be supplied to the fuel cell 1 by controlling the anode pressure control valve 33, the cathode pressure control valve 28, the cathode compressor 25 and the like according to an operating state of the fuel cell system 100.

Further, the controller 6 calculates target output power on the basis of power required by the travel motor 53, power required by the auxiliary machines such as the cathode compressor 25, charge/discharge requests of the battery 55 and the like. The controller 6 calculates a target output current of the fuel cell 1 on the basis of the target output power by referring to an IV characteristic (current-voltage characteristic) of the fuel cell 1 determined in advance. Then, the controller 6 controls the output voltage of the fuel cell 1 by the DC/DC converter 56 such that the output current of the fuel cell 1 reaches the target output current, and executes a control to supply a necessary current to the travel motor 53 and the auxiliary machines.

Further, the controller 6 controls the cathode compressor 25 and the like such that a degree of wetness (water content) of each electrolyte membrane 111 of the fuel cell 1 is in a state suitable for power generation.

Further, the controller 6 calculates an impedance Z of the fuel cell 1 at a predetermined frequency by dividing an amplitude value of a voltage value, in which an alternating-current signal of the predetermined frequency is superimposed on an output voltage of the fuel cell 1, by an amplitude value of a current value likewise superimposed with an alternating-current signal in first to sixth embodiments described later.

In the fuel cell system 100 described as above, a state detection device for the fuel cell 1 is configured by the controller 6, the current sensor 51, the voltage sensor 52 and the DC/DC converter 56.

In the present embodiment, a simplified equivalent circuit model taking into account of a reaction resistance $R_a$ and an electrical double layer capacitance $C_a$, which are state quantities of the anode electrode 112 in the fuel cell 1, a reaction resistance $R_c$ and an electrical double layer capacitance $C_c$, which are state quantities of the cathode electrode 113, and an electrolyte membrane resistance value $R_m$, which is a state quantity of the electrolyte membrane 111, is set and a state of the fuel cell 1 is estimated on the basis of this simplified equivalent circuit model.

It should be noted that the electrolyte membrane resistance value $R_m$ is a state quantity whose value is determined according to a degree of wetness of the electrolyte membrane 111. Normally, as the electrolyte membrane 111 becomes drier, the electrolyte membrane resistance value $R_m$ tends to increase.

Further, the reaction resistance value $R_a$ of the anode electrode 112 increases and decreases according to the reaction of the anode gas in the anode electrode 112. For example, if there is a factor due to which the reaction does not smoothly proceed such as a shortage of the anode gas, the reaction resistance value $R_a$ increases according to this.

Furthermore, the electrical double layer capacitance $C_a$ of the anode electrode 112 is modeled to represent an electrical capacitance of the anode electrode 112 in the fuel cell 1. Thus, the electrical double layer capacitance $C_a$ is determined on the basis of various elements such as a constituting material, the size and the like of the anode electrode 112.

Further, the reaction resistance value $R_c$ of the cathode electrode 113 increases and decreases according to the reaction of the cathode gas in the cathode electrode 113. For example, if there is a factor due to which the reaction does not smoothly proceed such as a shortage of the cathode gas, the reaction resistance value $R_c$ increases according to this.

Furthermore, the electrical double layer capacitance $C_c$ of the cathode electrode 113 is modeled to represent an electrical capacitance of the cathode electrode 113. Thus, the electrical double layer capacitance value $C_c$ is determined on the basis of various elements such as a constituting material, the size and the like of the cathode electrode 113.

Here, the present inventors found out that there was a frequency dependent characteristic in a path, along which an alternating-current signal (alternating current) superimposed on an output current of the fuel cell 1 flowed in the fuel cell, in the simplified equivalent circuit model of the fuel cell 1. The frequency dependent characteristic in the path along which the alternating current flows in the fuel cell is described below.

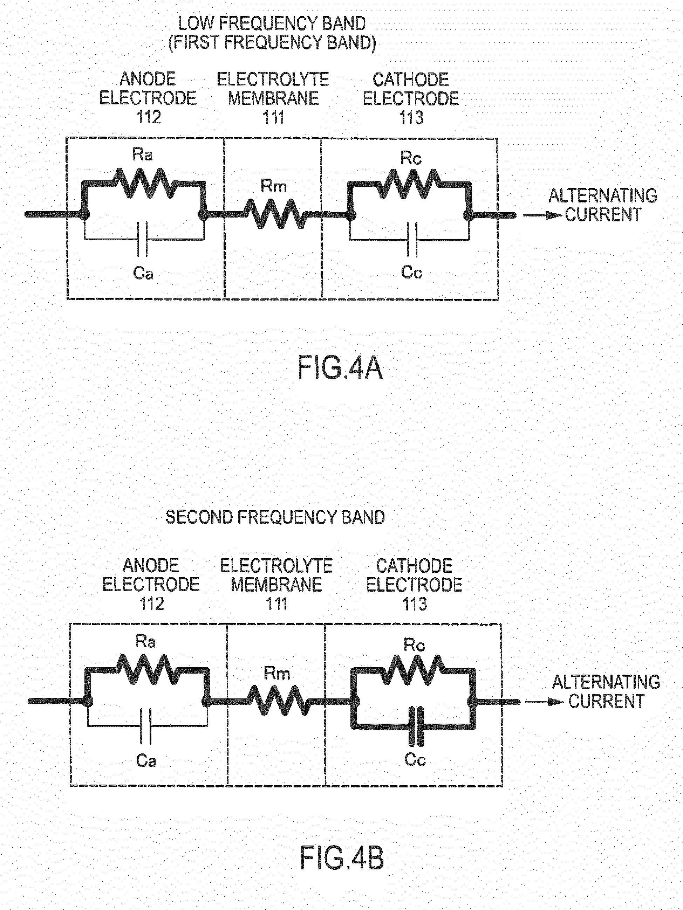

FIGS. 4A to 4D are diagrams schematically showing a path, along which an alternating current superimposed on an output current of the fuel cell 1 flows, in the equivalent circuit model of the fuel cell 1 according to the present embodiment for each frequency band of the alternating current.

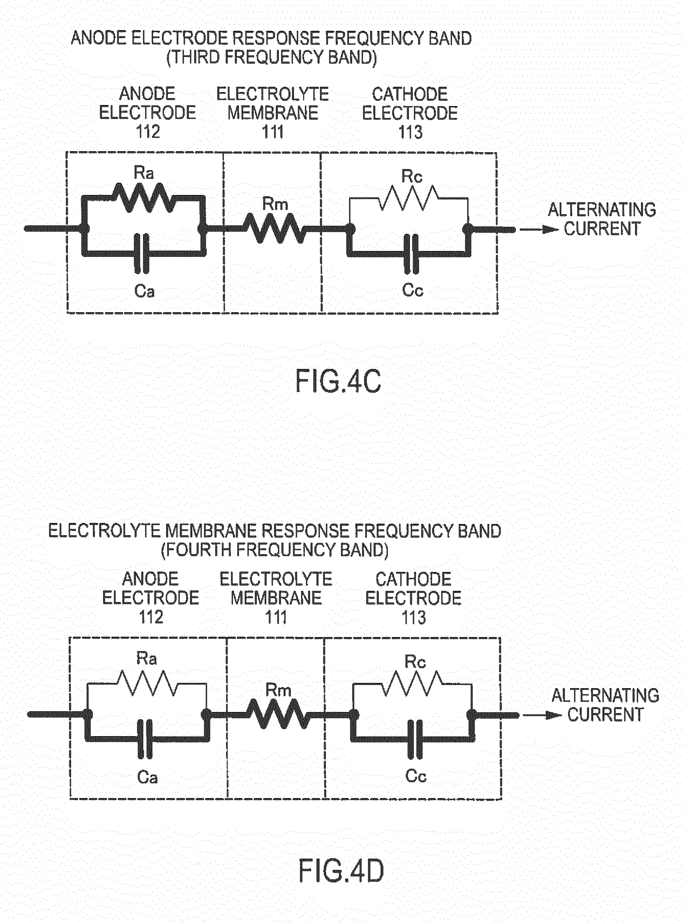

FIG. 4A shows a path of an alternating current of a frequency belonging to a low frequency band, for example, near 0 Hz (hereinafter, also written as a first frequency band). Further, FIG. 4B shows a path of an alternating current of a frequency belonging to a frequency band slightly higher than the first frequency band by about several Hz (hereinafter, also written as a second frequency band). Furthermore, FIG. 4C shows a path of an alternating current of a frequency belonging to a frequency band slightly higher than the second frequency band by about several tens of Hz to several KHz (hereinafter, also written as a third frequency band). Further, FIG. 4D shows a path of an alternating current of a frequency belonging to a highest frequency band of several tens of KHz or higher (hereinafter, also written as a fourth frequency band). Note that the path of the alternating current is shown by a thick line in FIGS. 4A to 4D.

First, the value of the alternating current of the frequency belonging to the first frequency band shown in FIG. 4A moderately varies since the frequency is low, and properties of the alternating current are close to those of a direct current having a constant current value. Thus, the alternating current having the properties close to those of the direct current does not flow to the electrical double layer capacitance of the anode electrode 112 and the electrical double layer capacitance of the cathode electrode 113 or, even if the alternating current flows, the magnitude thereof is small to a negligible extent. Specifically, as shown in FIG. 4A, the alternating current substantially flows only to the reaction resistance of the anode electrode 112, the electrolyte membrane resistance and the reaction resistance of the cathode electrode 113.

Next, the value of the alternating current of the frequency belonging to the second frequency band shown in FIG. 4B more largely varies as compared to the alternating current of the frequency belonging to the first frequency band, and properties as the alternating current are intensified. Thus, as shown in FIG. 4B, the alternating current is thought to start flowing also toward the electrical double layer capacitance of the cathode electrode 113.

On the other hand, since the reaction resistance value $R_a$ of the anode electrode 112 is known to have a much smaller value than the reaction resistance value $R_c$ of the cathode electrode 113, the current relatively easily flows toward the reaction resistance of the anode electrode 112. Thus, it is thought that the alternating current of the frequency in the second frequency band still does not flow toward the electrical double layer capacitance part of the anode electrode 112 or, even if the alternating current flows, the magnitude thereof is small to a negligible extent.

Further, the value of the alternating current of the frequency belonging to the third frequency band shown in FIG. 4C more largely varies as compared to the alternating current of the frequency belonging to the second frequency band, and properties as the alternating current are further intensified. Thus, the influence of the electrical double layer capacitance of the anode electrode 112 can be no longer ignored and the current is thought to flow also to the electrical double layer capacitance of the anode electrode 112.

On the other hand, in this third frequency band, an oxidation/reduction reaction in the cathode electrode 113 cannot follow a variation speed of the value of the above alternating current and a state occurs in which this oxidation/reduction reaction does not apparently occur.

Accordingly, the cathode gas substantially does not react in the cathode electrode 113, wherefore the influence of the reaction resistance of the cathode electrode 113 due to the above oxidation/reduction reaction can be ignored.

Specifically, in the third frequency band, the alternating current does not flow to the reaction resistance of the cathode electrode 113 or, even if the alternating current flows, the magnitude thereof is small to a negligible extent. Thus, the alternating current is thought to substantially flow only to the electrical double layer capacitance component.

It should be noted that performance of the oxidation/reduction reaction to follow a variation of the value of the alternating current is relatively high in the anode electrode 112 and this oxidation/reduction reaction can still follow the variation of the value of the alternating current in the third frequency band. Thus, as shown in FIG. 4C, the alternating current of the frequency belonging to the third frequency band is thought to still flow through the reaction resistance of the anode electrode 112.

The value of the alternating current of the frequency belonging to the fourth frequency band shown in FIG. 4D even more largely varies as compared to the alternating current of the frequency belonging to the third frequency band, wherefore not only the oxidation/reduction reaction in the cathode electrode 113, but also the oxidation/reduction reaction in the anode electrode 112 can no longer follow the variation of the value of this alternating current.

Accordingly, the reaction substantially does not occur in the anode electrode 112 in addition to in the cathode electrode 113, and the influence of both the reaction resistance of the cathode electrode 113 and that of the anode electrode 112 can be ignored.

Specifically, in the fourth frequency band, the alternating current does not flow to the reaction resistances of both the cathode electrode 113 and the anode electrode 112 or, even if the alternating current flows, the magnitude thereof is small to a negligible extent. Thus, as shown in FIG. 4D, the alternating current of the frequency belonging to the fourth frequency band is thought to flow only toward the electrical double layer capacitance of each of the cathode electrode 113 and the anode electrode 112.

As is understood from the above description, the paths along which the alternating current of the frequency selected from the aforementioned first frequency band, the alternating current of the frequency selected from the aforementioned second frequency band, the alternating current of the frequency selected from the aforementioned third frequency band and the alternating current of the frequency selected from the aforementioned fourth frequency band flow to each element in the simplified equivalent circuit of the fuel cell differ.

Accordingly, the present inventors arrived at individual estimation of various state quantities from impedances based on frequencies belonging to each frequency band with reference to the following equation for impedance obtained on the basis of the simplified equivalent circuit utilizing differences of the paths of the alternating currents corresponding to the frequencies as just described:

[Equation 1]

$$Z = R_m + \frac{R_a\left(1 - j\omega C_a R_a\right)}{1 + \omega^2 C_a^2 R_a^2} + \frac{R_c\left(1 - j\omega C_c R_c\right)}{1 + \omega^2 C_c^2 R_c^2} \qquad (1)$$

(where j denotes an imaginary unit).

For example, the alternating current of the frequency selected from the above fourth frequency band (hereinafter, also written as an "electrolyte membrane response frequency band") flows to the electrolyte membrane resistance, the electrical double layer capacitance of the anode electrode 112 and the electrical double layer capacitance of the cathode electrode 113. Thus, the impedance based on the frequency selected from this electrolyte membrane response frequency band (hereinafter, also written as an "electrolyte membrane response impedance") includes information of the electrolyte membrane resistance value $R_m$.

It should be noted that this electrolyte membrane response frequency band is a frequency band used in so-called HFR (High Frequency Resistance) measurement. Thus, if $\omega \rightarrow \infty$ is assumed in Equation (1) for impedance, the impedance Z can be regarded to substantially match the electrolyte membrane resistance value $R_m$.

Further, the alternating current of the frequency selected from the third frequency band (hereinafter, also written as an "anode electrode response frequency band") flows to the electrolyte membrane resistance, the reaction resistance of the anode electrode 112, the electrical double layer capacitance of the anode electrode 112 and the electrical double layer capacitance of the cathode electrode 113. Thus, the impedance based on the frequency selected from this anode electrode response frequency band (hereinafter, also written as an "anode electrode response impedance") includes information of at least the reaction resistance value $R_a$ of the anode electrode 112 and the electrical double layer capacitance value $C_a$ of the anode electrode 112.

Particularly, since the reaction resistance of the cathode electrode 113 can be ignored in the equivalent circuit shown in FIG. 4C in this case, the following equation for impedance is given.

[Equation 2]

$$Z = R_m + \frac{R_a(1 - j\omega C_a R_a)}{1 + \omega^2 C_a^2 R_a^2} - j\frac{1}{\omega C_c} \quad (2)$$

Further, the alternating current of the frequency selected from the second frequency band flows to the electrolyte membrane resistance, the reaction resistance of the anode electrode 112, the reaction resistance of the cathode electrode 113 and the electrical double layer capacitance of the cathode electrode 113. Thus, the impedance based on the frequency selected from this second frequency band includes information of the electrolyte membrane resistance value, the reaction resistance value of the anode electrode 112, the reaction resistance value $R_c$ of the cathode electrode 113 and the electrical double layer capacitance value $C_c$ of the cathode electrode 113 as state quantities.

Furthermore, the alternating current of the frequency selected from the first frequency band (hereinafter, also written as a "low frequency band"), which is a lowest frequency band, flows to the electrolyte membrane resistance, the reaction resistance of the anode electrode 112 and the reaction resistance of the cathode electrode 113. Thus, the impedance based on the frequency selected from this low frequency band (hereinafter, also written as an "low frequency response impedance") includes information of at least the reaction resistance value $R_c$ of the cathode electrode 113.

The estimation of each state quantity using at least two of the above electrolyte membrane response frequency band, anode electrode response frequency band and low frequency band is described in detail in each embodiment below.

It should be noted that it is generally known that there is a relationship of $\omega = 2nf$ between a "frequency f" and an "angular frequency $\omega$", and there is only a difference multiplied by a dimensionless constant $2\pi$ between these. Thus, the "frequency" and the "angular frequency" are identified with each other and a symbol "$\omega$" is used in expressing the both to facilitate description in each embodiment.

(First Embodiment)

A first embodiment is described below.

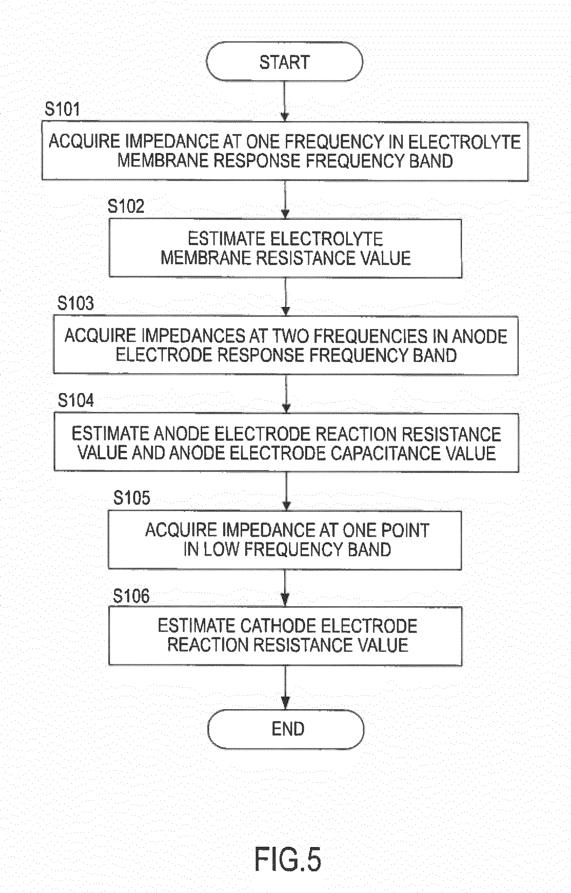

FIG. 5 is a flow chart showing the flow of state quantity estimation according to the present embodiment.

As shown, first in Step S101, a frequency $\omega_H$ at one point in the electrolyte membrane response frequency band is selected and an impedance Z ($\omega_H$) based on the frequency $\omega_H$ is obtained.

Specifically, the controller 6 controls the DC/DC converter 56 such that an alternating-current signal of the frequency $\omega_H$ in the electrolyte membrane response frequency band is superimposed on an output voltage and an output current output from the fuel cell 1 at an impedance measurement timing.

Further, the controller 6 applies a Fourier transform processing on a value V of the output voltage measured by the voltage sensor 52 to obtain a voltage amplitude value $V(\omega_H)$, applies a Fourier transform processing on a value 1 of the output current measured by the current sensor 51 to obtain a current amplitude value $I(\omega_H)$ and obtains a ratio $V(\omega_H)/I(\omega_H)$ of these as the impedance $Z(\omega_H)$. It should be noted that since a method for measuring the impedance $Z(\omega_H)$ is similar also in the case of measurement for the frequency selected from the anode electrode response frequency band or the low frequency band other than the electrolyte membrane response frequency band, detailed description is omitted hereinafter.

Subsequently, in Step S102, the controller 6 estimates the electrolyte membrane resistance value $R_m$ from the obtained impedance $Z(\omega_H)$. Specifically, since the electrolyte membrane response frequency band is a frequency band used in the so-called HFR measurement as described above, the impedance $Z(\omega_H)$ based on the frequency $\omega_H$ selected from this high frequency band or a real component $Z_r(\omega_H)$ thereof substantially matches the electrolyte membrane resistance value $R_m$. Specifically, the value of the impedance $Z(\omega_H)$ or the real component $Z_r(\omega_H)$ thereof is directly estimated as the electrolyte membrane resistance value $R_m$.

In Step S103, the controller 6 selects frequencies $\omega_1$, $\omega_2$ at two points in the anode electrode response frequency band and obtains anode electrode response impedances $Z(\omega_1)$, $Z(\omega_2)$ based on these frequencies $\omega_1$, $\omega_2$.

In Step S104, the controller 6 estimates the reaction resistance value $R_a$ of the anode electrode 112 and the electrical double layer capacitance value $C_a$ of the anode electrode 112 from the estimated electrolyte membrane resistance value $R_m$ and the obtained two impedances $Z(\omega_1)$, $Z(\omega_2)$.

A mode of this estimation is specifically described. First, in the case of selecting the frequencies $\omega_1$, $\omega_2$ at the two points in the anode electrode response frequency band, the reaction resistance of the cathode electrode 113 can be ignored as described above. Thus, Equation (2) obtained by removing the reaction resistance value $R_c$ of the cathode electrode 113 from Equation (1) for impedance based on the simplified equivalent circuit can be used as an equation for impedance.

Here, the frequencies $\omega_1$, $\omega_2$ at the two points, which are known values, and a combination of the impedances $Z(\omega_1)$ and $Z(\omega_2)$ based on these are substituted into in Equation (2) and real components $Z_r(\omega_1)$ and $Z_r(\omega_2)$ of the impedances $Z(\omega_1)$ and $Z(\omega_2)$ are taken. Considering that the estimated electrolyte membrane resistance value $R_m$ is known, two equations with $R_a$ and $C_a$ serving as unknowns are obtained. Thus, $R_a$ and $C_a$ can be obtained if the obtained two equations are solved.

An example of a method for obtaining the unknowns $R_a$ and $C_a$ is described. First, if the real component of Equation (2) is taken and changed, the following equation is obtained.

[Equation 3]

$$\frac{1}{Z_r} = \omega^2 C_a^2 R_a + \frac{1}{R_a} - \frac{R_m}{Z_r(Z_r - R_m)} \qquad (3)$$

Considering a plane with $\omega^2$ represented on a horizontal axis and $1/Z_r$ represented on a vertical axis, a straight line is represented by Equation (3) on this plane and a gradient $m_r$ thereof is given by the following equation.

[Equation 4]

$$m_r = C_a^2 R_a \qquad (4)$$

Here, the frequencies $\omega_1$, $\omega_2$ at the two points are known. Thus, if these frequencies $\omega_1$, $\omega_2$ at the two points and the real components $Z_r(\omega_1)$ and $Z_r(\omega_2)$ of the impedance measurement values corresponding to these frequencies are plotted on the above plane, a straight line connecting these points is determined and the value of the gradient $m_r$ is determined. Specifically, unknowns of Equation (4) are $R_a$ and $C_a$.

Subsequently, an intercept a of the straight line represented by Equation (3) is given by the following equation.

[Equation 5]

$$a = \frac{1}{R_a} - \frac{R_m}{Z_r(Z_r - R_m)} \qquad (5)$$

Here, the value of the intercept a is determined by the frequencies $\omega_1$, $\omega_2$ at the points and the real components $Z_{r1}$ and $Z_{r2}$ of the impedance measurement values corresponding to these frequencies similarly to the value of the gradient $m_r$. Since $Z_r$ is equivalent to the real components $Z_{r1}$ and $Z_{r2}$ of the impedance measurement values, only $R_a$ is unknown in Equation (5).

Thus, according to Equation (5), the reaction resistance value $R_a$ of the anode electrode 112 can be obtained as follows.
[Equation 6]

$$R_a = \frac{Z_r(Z_r - R_m)}{Z_r a(Z_r - R_m) + R_m} \quad (6)$$

Further, by substituting $R_a$ determined by Equation (6) into Equation (4), the electrical double layer capacitance value $C_a$ of the anode electrode 112 can be obtained as follows.
[Equation 7]

$$C_a = \sqrt{\frac{m_r}{R_a}} \quad (7)$$

It should be noted that a method for calculating $R_a$ and $C_a$ is not limited to the above calculation method and various suitable calculation methods can be used.

Subsequently, in Step 105, the controller 6 selects a frequency $\omega_L$ at one point in the low frequency band and measures an impedance $Z(\omega_L)$ based on this frequency $\omega_L$.

In Step S106, the controller 6 estimates the electrical double layer capacitance value $C_c$ of the cathode electrode 113 using the already estimated electrolyte membrane resistance value $R_m$, reaction resistance value $R_a$ of the anode electrode 112 and electrical double layer capacitance value $C_a$ of the anode electrode 112 and the measured impedance $Z(\omega_L)$.

A mode of this estimation is specifically described. An alternating current of the frequency $\omega_L$ in the low frequency band flows to all the circuit elements in the simplified equivalent circuit of the fuel cell 1, i.e. the reaction resistance and the electrical double layer capacitance of the anode electrode 112, the electrolyte membrane resistance and the reaction resistance and the electrical double layer capacitance of the cathode electrode 113 as described above. Thus, the low frequency impedance $Z(\omega_L)$ obtained on the basis of the frequency $\omega_L$ includes information of the reaction resistance $R_a$ and the electrical double layer capacitance $C_a$ of the anode electrode 112, the electrolyte membrane resistance $R_m$ and the reaction resistance $R_c$ and the electrical double layer capacitance $C_c$ of the cathode electrode 113. Thus, Equation (1) taking into account of all the above circuit elements needs to be used as the equation for impedance.

The frequency $\omega_L$, which is a known value, and the impedance $Z(\omega_L)$ based on this frequency are substituted into Equation (1), and a real component $Z_r(\omega_L)$ and an imaginary component $Z_1(\omega_L)$ are taken. Considering that the estimated electrolyte membrane resistance value $R_m$, reaction resistance value $R_a$ of the anode electrode 112 and electrical double layer capacitance $C_a$ of the anode electrode 112 are known, two equations with $R_c$ and $C_c$ serving as unknowns are obtained. Thus, the unknowns $R_c$ and $C_c$ can be obtained if these two equations are solved.

An example of a method for obtaining the unknowns $R_c$ and $C_c$ is described. First, if the real component of Equation (1) is taken and changed, the following equation is obtained.
[Equation 8]

$$Z_r = R_m + \frac{R_a}{1 + \omega^2 C_a^2 R_a^2} + \frac{R_c}{1 + \omega^2 C_c^2 R_c^2} \quad (8)$$

Further, if the imaginary component of Equation (1) is taken and changed, the following equation is obtained.
[Equation 9]

$$Z_i = \frac{-\omega C_a R_a}{1 + \omega^2 C_a^2 R_a^2} + \frac{-\omega C_c R_c}{1 + \omega^2 C_c^2 R_c^2} \qquad (9)$$

Here, the frequency $\omega_L$, the real component $Z_r(\omega_L)$ and the imaginary component $Z_l(\omega_L)$ of the impedance measurement value corresponding to the frequency $\omega_L$ and $R_a$ and $C_a$ are known. If these are substituted into Equations (8) and (9) and Equations are changed, the electrical double layer capacitance value $C_c$ of the cathode electrode 113 is as follows.
[Equation 10]

$$C_c = \frac{1}{\omega R_c} \sqrt{\frac{R_c - A}{A}} \qquad (10)$$

In Equation (10), $\omega$ is $\omega_L$ and A is defined as in the following Equation (11).
[Equation 11]

$$A = Z_r - R_m - \frac{R_a}{1 + \omega^2 C_a^2 R_a^2} \qquad (11)$$

Further, the reaction resistance value $R_c$ of the cathode electrode 113 is obtained as follows.
[Equation 12]

$$R_c = \frac{1 - 2B^2 \pm \sqrt{1 - 4B^2}}{2B} A + A \qquad (12)$$

A in Equation (12) is defined as in the above Equation (11) and B in Equation (12) is defined as in the following Equation (13).
[Equation 13]

$$B = Z_i + \frac{\omega C_a R_a}{1 + \omega^2 C_a^2 R_a^2} \qquad (13)$$

As described above, the electrolyte membrane resistance value $R_m$, the reaction resistance value $R_a$ of the anode electrode 112, the electrical double layer capacitance value $C_a$ of the anode electrode 112, the reaction resistance value $R_c$ of the cathode electrode 113 and the electrical double layer capacitance value $C_c$ of the cathode electrode 113 are estimated as the state quantities of the fuel cell 1 by Steps S101 to S106.
According to the present embodiment described above, the following effects can be obtained. In the present embodiment, the state detection device is configured by the controller 6, the current sensor 51, the voltage sensor 52 and the DC/DC converter 56. Further, impedance acquisition unit and internal state quantity estimation unit are configured by the controller 6.
According to the present embodiment, the impedance acquisition unit of the state detection device for the fuel cell 1 for generating power upon receiving the supply of the anode gas and the cathode gas acquires the high frequency impedances $Z(\omega_H)$, $Z(\omega_1)$ and $Z(\omega_2)$ based on the frequencies $\omega_H$, $\omega_1$ and $\omega_2$ selected from the high frequency band (anode electrode response frequency band and electrolyte membrane response frequency band) including a frequency band which shows responsiveness at least to the state quantities $R_a$, $C_a$ of the anode electrode 112 and the low frequency impedance $Z(\omega_L)$ based on the frequency $\omega_L$ selected from the low frequency band including a frequency band which shows responsiveness at least to the state quantities $R_c$, $C_c$ of the cathode electrode (Step S101, Step S103, Step S105).

The internal state quantity estimation unit of the state detection device for the fuel cell 1 estimates each of the state quantities $R_a$, $C_a$ of the anode electrode 112 and the state quantities $R_c$, $C_c$ of the cathode electrode 113 serving as the internal states of the fuel cell 1 by combining the obtained high frequency impedances $Z(\omega_H)$, $Z(\omega_1)$ and $Z(\omega_2)$ and low frequency impedance $Z(\omega_L)$.

According to this, at least each of the state quantities $R_a$, $C_a$ of the anode electrode 112 and the state quantities $R_c$, $C_c$ of the cathode electrode 113 can be individually detected on the basis of the obtained high frequency impedances $Z(\omega_H)$, $Z(\omega_1)$ and $Z(\omega_2)$ and low frequency impedance $Z(\omega_L)$, i.e. impedance information obtained from the different frequency bands, utilizing a following speed difference of the reaction of the anode electrode 112 and the reaction of the cathode electrode 113 in response to a current variation according to the magnitude of the frequency. Thus, highly accurate information of the state quantities $R_a$, $C_a$ of the anode electrode 112 and the state quantities ($R_c$, $C_c$) of the cathode electrode 113 can be obtained, with the result that an operation control of the fuel cell 1 executed utilizing these state quantities can be made more proper.

Further, according to the present embodiment, the internal state quantity estimation unit estimates the internal state quantities $R_m$, $R_a$ and $C_a$ on the basis of the high frequency impedances $Z(\omega_H)$, $Z(\omega_1)$ and $Z(\omega_2)$ and estimates the other internal state quantities $R_c$ and $C_c$ on the basis of the estimated internal state quantities $R_m$, $R_a$ and $C_a$ and the low frequency impedance $Z(\omega_L)$.

In this way, the internal state quantities $R_c$, $C_c$ that cannot be determined only from the low frequency impedance $Z(\omega_L)$ in the low frequency band, which is one frequency band, can be determined on the basis of the internal state quantities $R_m$, $R_a$ and $C_a$ estimated from the high frequency impedances $Z(\omega_H)$, $Z(\omega_1)$ and $Z(\omega_2)$ in the high frequency band, which is another frequency band. Specifically, each of a plurality of types of internal state quantities $R_m$, $R_a$, $C_a$, $R_c$ and $C_c$ can be more reliably distinguished.

It should be noted that the internal state quantity estimation unit may, conversely, estimate a certain internal state quantity on the basis of the low frequency impedance $Z(\omega_L)$ and estimate another internal state quantity on the basis of the estimated internal state quantity and the high frequency impedances $Z(\omega_H)$, $Z(\omega_1)$ and $Z(\omega_2)$.

Further, according to the present embodiment, the above high frequency band (anode electrode response frequency band and electrolyte membrane response frequency band) includes the anode electrode response frequency band, which is a frequency band which shows responsiveness to the state quantities $R_a$, $C_a$ of the anode electrode 112 of the fuel cell 1, and the electrolyte membrane response frequency band, which is a frequency band higher than the anode electrode response frequency band and which shows responsiveness to the state quantity $R_m$ of the electrolyte membrane of the fuel cell 1. The impedance acquisition unit acquires both the anode electrode response impedances $Z(\omega_1)$, $Z(\omega_2)$ based on the frequencies selected from the anode electrode response frequency band and the electrolyte membrane response impedance $Z(\omega_H)$ based on the frequency selected from the electrolyte membrane response frequency band as the high frequency impedances $Z(\omega_H)$, $Z(\omega_1)$ and $Z(\omega_2)$ (Step S101, Step S103).

In this way, each of the state quantity $R_m$ of the electrolyte membrane 111 of the fuel cell 1 and the state quantities $R_a$, $C_a$ of the anode electrode 112 can be estimated on the basis of the electrolyte membrane response impedance $Z(\omega_H)$ and the anode electrode response impedances $Z(\omega_1)$, $Z(\omega_2)$.

Further, according to the present embodiment, the internal state quantity estimation unit estimates the state quantity $R_m$ of the electrolyte membrane 111 on the basis of the electrolyte membrane response impedance $Z(\omega_H)$ (Step S102) and estimates the state quantities $R_a$, $C_a$ of the anode electrode 112 on the basis of the estimated electrolyte membrane resistance $R_m$ and the anode electrode response impedances $Z(\omega_1)$, $Z(\omega_2)$ (Step S104).

In this way, the state quantities $R_a$, $C_a$ of the anode electrode 112 can be estimated in clearer distinction from the other state quantities on the basis of the estimated state quantity $R_m$ of the electrolyte membrane 111 and the anode electrode response impedances $Z(\omega_1)$, $Z(\omega_2)$.

Particularly, in the present embodiment, the state quantities $R_a$, $C_a$ of the anode electrode 112 include the reaction resistance value $R_a$ and the electrical double layer capacitance value $C_a$ of the anode electrode 112, and the state quantities $R_c$, $C_c$ of the cathode electrode 113 include the reaction resistance value $R_c$ and the electrical double layer capacitance value $C_c$ of the cathode electrode 113. The internal state quantity estimation unit estimates the reaction resistance value $R_a$ of the anode electrode 112 and the electrical double layer capacitance value $C_a$ of the anode electrode 112 on the basis of the anode electrode response impedance $Z(\omega_1)$, $Z(\omega_2)$ (Step S104). Further, the internal state quantity estimation unit estimates the reaction resistance value $R_c$ of the cathode electrode 113 on the basis of the estimated state quantity $R_m$ of the electrolyte membrane 111, reaction resistance value $R_a$ of the anode electrode 112, electrical double layer capacitance value $C_a$ of the anode electrode 112 and the low frequency impedance $Z(\omega_L)$ (Step S106).

According to this, the reaction resistance value $R_a$ and the electrical double layer capacitance value $C_a$ of the anode electrode 112 estimated on the basis of the anode electrode response impedances ($Z(\omega_1)$, $Z(\omega_2)$) and the state

quantity $R_m$ of the electrolyte membrane 111 estimated on the basis of the electrolyte membrane response impedance $Z(\omega_H)$ can be applied to the low frequency impedance $Z(\omega_L)$ in the low frequency band including all pieces of information other than the reaction resistance value $R_c$ of the cathode electrode 113.

Accordingly, the targeted state quantity $R_c$ can be suitably distinguished and estimated from the low frequency impedance $Z(\omega_L)$ in the low frequency band including information other than the targeted state quantity $R_c$.

(Second Embodiment)

A second embodiment is described below. It should be noted that elements similar to those of the already described first embodiment are denoted by the same reference signs.

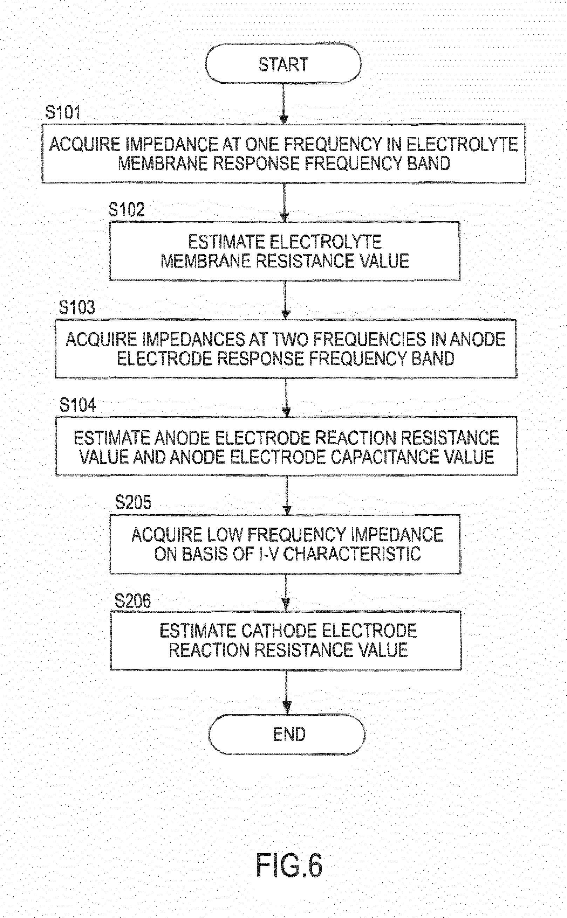

FIG. 6 is a flow chart showing the flow of state quantity estimation according to the second embodiment. Since Steps S101 to S104 in FIG. 6 are similar to Steps S101 to S104 in FIG. 5, no detailed description is given. In the second embodiment, a gradient of a straight part of a characteristic curve in an I-V characteristic curve diagram (I-V characteristic diagram) of a fuel cell 1 set in advance is regarded and acquired as a low frequency impedance instead of measuring a low frequency impedance at a frequency in a low frequency band.

As shown, after Steps S101 to S104, i.e. estimation values of the reaction resistance value $R_a$ and the electrical double layer capacitance value $C_a$ of the anode electrode 112 are acquired, the gradient $\Delta V/\Delta I$ of the straight part of the characteristic curve in the I-V characteristic diagram of the fuel cell 1 is regarded and acquired as the low frequency impedance $Z(\omega_L)$ in Step S205.

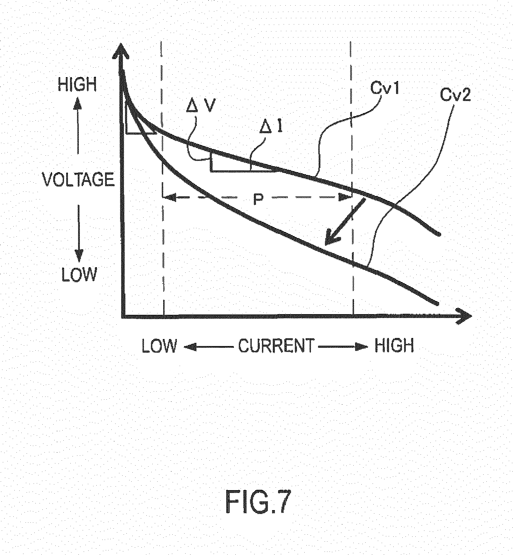

FIG. 7 shows I-V characteristic curves of the fuel cell 1 respectively in steady time and in unsteady time. It should be noted that these I-V characteristic curves of the fuel cell 1 are determined in advance on the basis of an experiment or the like. A characteristic curve Cv1 shows an I-V characteristic in steady time and a characteristic curve Cv2 shows an I-V characteristic in unsteady time. Here, the I-V characteristic in steady time means an output characteristic of the fuel cell 1 during stable travel not in a sudden accelerating state such as during vehicle startup or during vehicle stop.

Particularly, as understood from FIG. 7, a variation of the gradient $\Delta V/\Delta I$ is small, has a substantially constant value and is linear in a steady region P of the characteristic curve Cv1 in steady time. Thus, in the steady region P, the gradient $\Delta V/\Delta I$ can be regarded as a constant value regardless of an output current I.

As just described, the steady region P where the value of $\Delta V/\Delta I$ is constant is a section of a horizontal axis (output current I) in which the value of $\Delta V/\Delta I$ of the characteristic curve Cv1 in steady time is not larger than a predetermined value.

In the present embodiment, the controller 6 stores the value of $\Delta V/\Delta I$ in this steady region P in an unillustrated memory or the like in advance, reads the value of $\Delta V/\Delta I$ from this memory at an acquisition timing of the low frequency impedance $Z(\omega_L)$ and regards this value as the low frequency impedance $Z(\omega_L)$. The low frequency impedance $Z(\omega_L)$ obtained in this way matches well an actual value.

In Step S206, the reaction resistance value $R_c$ of the cathode electrode 113 is estimated using the value of $\Delta V/\Delta I$ acquired as the low frequency impedance $Z(\omega_L)$.

This is specifically described. If $\omega$ is assumed to be a low frequency ($\omega \to 0$) in Equation (1) described above, the following equation is thought to hold.

[Equation 14]

$$\lim_{\omega \to 0} Z = R_m + R_a + R_c \qquad (14)$$

Thus, if the impedance Z is substituted by $\Delta V/\Delta I$ in Equation (14), the following equation is obtained.

[Equation 15]

$$R_c = \frac{\Delta V}{\Delta I} - R_m - R_a \qquad (15)$$

In this way, the reaction resistance value $R_c$ of the cathode electrode 113 can be calculated by substituting the electrolyte membrane resistance value $R_m$ estimated in the process of Steps S101 to S104 and the reaction resistance value $R_a$ of the anode electrode 112 into Equation (15).

According to the state detection device for the fuel cell 1 according to the present embodiment described above, the controller 6 serving as the impedance acquisition unit acquires the gradient $\Delta V/\Delta I$ of the I-V characteristic curve of the fuel cell 1 as the low frequency impedance $Z(\omega_1)$. Specifically, the low frequency impedance $Z(\omega_1)$ can be acquired

without being directly measured.

It should be noted that the low frequency impedances $Z(\omega_1)$ may be acquired by both methods for acquiring the low frequency impedance $Z(\omega_1)$ as the value of the gradient $\Delta V/\Delta I$ of the I-V characteristic curve and acquiring the low frequency impedance $Z(\omega_1)$ by measurement and the highly accurate low frequency impedance $Z(\omega_1)$ acquired such as by comparing/correcting the low frequency impedances $Z(\omega_1)$ obtained by these two methods may be used for the estimation of the reaction resistance value $R_c$ of the cathode electrode 113.

Further, in the present embodiment, the controller 6 serving as the impedance acquisition unit acquires the gradient $\Delta V/\Delta I$ as the low frequency impedance $Z(\omega_1)$ in the steady region P where the variation of the value of the gradient in the I-V characteristic curve Cv1 of the fuel cell 1 is not larger than the predetermined value.

As just described, in the steady region P where the variation of the gradient $\Delta V/\Delta I$ is relatively small, there is no problem in regarding the value of the gradient $\Delta V/\Delta I$ as constant regardless of a measurement value of the output current I. Thus, it is not necessary to calculate the value of the gradient $\Delta V/\Delta I$ for each of the measurement values of the output voltage V and the output current I and the amount of calculation can be reduced.

(Third Embodiment)

A third embodiment is described below. It should be noted that elements similar to those of the already described embodiments are denoted by the same reference signs.

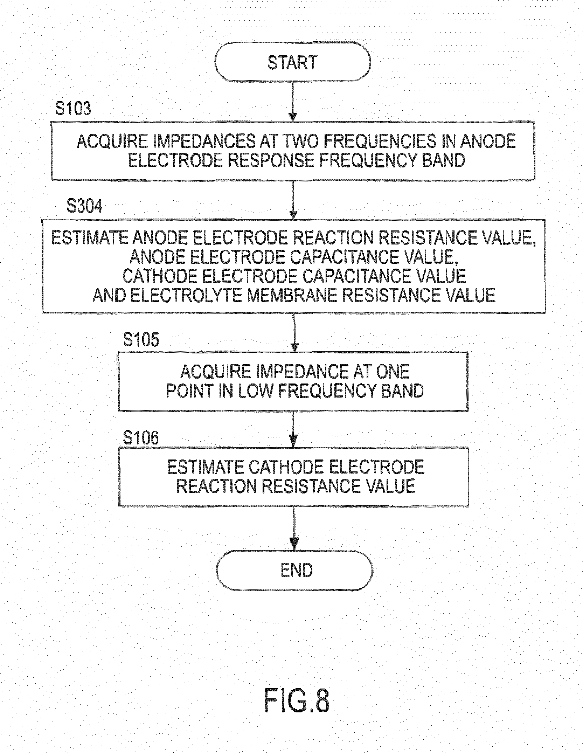

FIG. 8 is a flow chart showing the flow of state quantity estimation according to the present embodiment. As shown, the estimation of the electrolyte membrane resistance value $R_m$ using the frequency in the electrolyte membrane response frequency band equivalent to Steps S101 and S102 shown in FIG. 5 is omitted.

Particularly, in the present embodiment, the reaction resistance value $R_a$ of the anode electrode 112, the electrical double layer capacitance value $C_a$ of the anode electrode 112, the electrical double layer capacitance value $C_c$ of the cathode electrode 113 and the electrolyte membrane resistance value $R_m$ serving as state quantities are estimated, using anode electrode response impedances $Z(\omega_1)$, $Z(\omega_2)$ acquired at two frequencies $\omega_1$, $\omega_2$ in the anode electrode response frequency band in specific Step S304 (Step S304).

A mode of the state quantity estimation in Step S304 is described below.

Also in the present embodiment, calculation is performed on the basis of Equation (2) for impedance described above. A step of obtaining Equation (3) by taking a real component of Equation (2) and obtaining Equation (4) on the basis of Equation (3) is as in the case of estimating the reaction resistance value $R_a$ of the anode electrode 112 and the electrical double layer capacitance value $C_a$ of the anode electrode 112 according to the first embodiment.

If Equation (4) is changed, the following equation is obtained.

[Equation 16]

$$R_a = \frac{m_r}{C_a^2} \qquad (16)$$

It should be noted that $m_r$ is a gradient of a straight line connecting two impedances $Z(\omega_1)$ and $Z(\omega_2)$ and a known value as described above.

On the other hand, if an imaginary component of Equation (2) is taken, the following equation is obtained.

[Equation 17]

$$Z_i = -\frac{\omega C_a R_a^2}{1 + \omega^2 C_a^2 R_a^2} - \frac{1}{\omega C_c} \qquad (17)$$

Here, if $R_a$ of Equation (16) is substituted into the above Equation (17) and both sides are multiplied by $\omega$, the following equation is obtained.

[Equation 18]

$$\omega Z_i = -\frac{\omega^2 m_r^2}{C_a^3 + \omega^2 m_r^2 C_a} - \frac{1}{C_c} \qquad (18)$$

If the above known frequencies $\omega_1$ and $\omega_2$ and imaginary components $Z_{i1}$ and $Z_{i2}$ of impedance measurement values corresponding to these frequencies are respectively substituted into Equation (18) to obtain two equations and the electrical double layer capacitance $C_c$ of the cathode is erased by taking a difference between these two equations, the following quartic equation for the unknown electrical double layer capacitance $C_a$ of the anode is obtained.
[Equation 19]

$$C_a^4 + \left(\omega_1^2 + \omega_2^2\right) m_r^2 C_a^2 + \frac{\omega_1^2 - \omega_2^2}{\omega_1 Z_{i1} - \omega_2 Z_{i2}} m_r^2 C_a + \omega_1^2 \omega_2^2 m_r^4 = 0 \qquad (19)$$

When the quartic equation of Equation (19) is solved and it is considered that $C_a$ cannot be an imaginary value, the following two solutions are obtained as candidates for the electrical double layer capacitance $C_a$ of the anode.
[Equation 20]

$$C_{a1} = \frac{\sqrt{t_1} + \sqrt{-t_1 - 2m_r^2\left(\omega_1^2 + \omega_2^2 + \frac{\omega_1^2 - \omega_2^2}{\sqrt{t_1}\left(\omega_1 Z_{i1} - \omega_2 Z_{i2}\right)}\right)}}{2} \qquad (20)$$

[Equation 21]

$$C_{a2} = \frac{\sqrt{t_1} - \sqrt{-t_1 - 2m_r^2\left(\omega_1^2 + \omega_2^2 + \frac{\omega_1^2 - \omega_2^2}{\sqrt{t_1}\left(\omega_1 Z_{i1} - \omega_2 Z_{i2}\right)}\right)}}{2} \qquad (21)$$

It should be noted that the quartic equation of Equation (19) can be solved by various methods known to a person skilled in the art.

Here, $t_1$ is a constant defined as follows.
[Equation 22]

$$t_1 = \sqrt[3]{\frac{27A_0 + 2A_2^3 - 9A_2A_1}{54} + \sqrt{\left(\frac{27A_0 + 2A_2^3 - 9A_2A_1}{54}\right)^2 + \left(\frac{3A_1 - A_2^2}{9}\right)^3}} \\ + \sqrt[3]{\frac{27A_0 + 2A_2^3 - 9A_2A_1}{54} - \sqrt{\left(\frac{27A_0 + 2A_2^3 - 9A_2A_1}{54}\right)^2 + \left(\frac{3A_1 - A_2^2}{9}\right)^3}} \qquad (22)$$

Although the embodiments of the present invention have been described above, the above embodiments are merely an illustration of some application examples of the present invention and not intended to limit the technical scope of the present invention to the specific configurations of the above embodiments.

Further, $A_2$, $A_1$ and $A_0$ in Equation are respectively as follows.
[Equations 23]

$$A_2 = 2\left(\omega_1^2 + \omega_2^2\right)m_r^2$$

$$A_1 = \left(\omega_1^2 + \omega_2^2\right)^2 m_r^4 - 4\omega_1^2\omega_2^2 m_r^4 \tag{23}$$

$$A_0 = -\left(\frac{\omega_1^2 - \omega_2^2}{\omega_1 Z_{i1} + \omega_2 Z_{i2}}\right)^2 m_r^4$$

Further, by substituting each of $C_{a1}$ and $C_{a2}$ into the above Equation (16), $R_{a1}$ and $R_{a2}$ are determined as candidates for the estimation value of the reaction resistance in correspondence with $C_{a1}$ and $C_{a2}$. The candidates $R_{a1}$ and $R_{a2}$ for the estimation value are as follows.
[Equation 24]

$$R_{a1} = \frac{4m_r}{\left\{\sqrt{t_1} + \sqrt{-t_1 - 2m_r^2\left(\omega_1^2 + \omega_2^2 + \frac{\omega_1^2 - \omega_2^2}{\sqrt{t_1}\left(\omega_1 Z_{i1} - \omega_2 Z_{i2}\right)}\right)}\right\}^2} \tag{24}$$

[Equation 25]

$$R_{a2} = \frac{4m_r}{\left\{\sqrt{t_1} - \sqrt{-t_1 - 2m_r^2\left(\omega_1^2 + \omega_2^2 + \frac{\omega_1^2 - \omega_2^2}{\sqrt{t_1}\left(\omega_1 Z_{i1} - \omega_2 Z_{i2}\right)}\right)}\right\}^2} \tag{25}$$

Here, it is necessary to determine a true estimation value conforming to an actual characteristic from the aforementioned candidates $C_{a1}$ and $C_{a2}$ for the electrical double layer capacitance value of the anode electrode 112 and candidates $R_{a1}$ and $R_{a2}$ for the reaction resistance value. An example of that method is described.
In the present embodiment, the determination of this true estimation value is judged not only from the values of $C_{a1}$, $R_{a1}$, $C_{a2}$ and $R_{a2}$, but also by the following equation for the electrical double layer capacitance value $C_c$ of the cathode electrode 113 obtained by changing the equation for the impedance imaginary component in the above Equation (17).
[Equation 26]

$$C_c = -\frac{1 + \omega^2 C_a^2 R_a^2}{\omega^2 C_a R_a^2 + \omega Z_i\left(1 + \omega^2 C_a^2 R_a^2\right)} \tag{26}$$

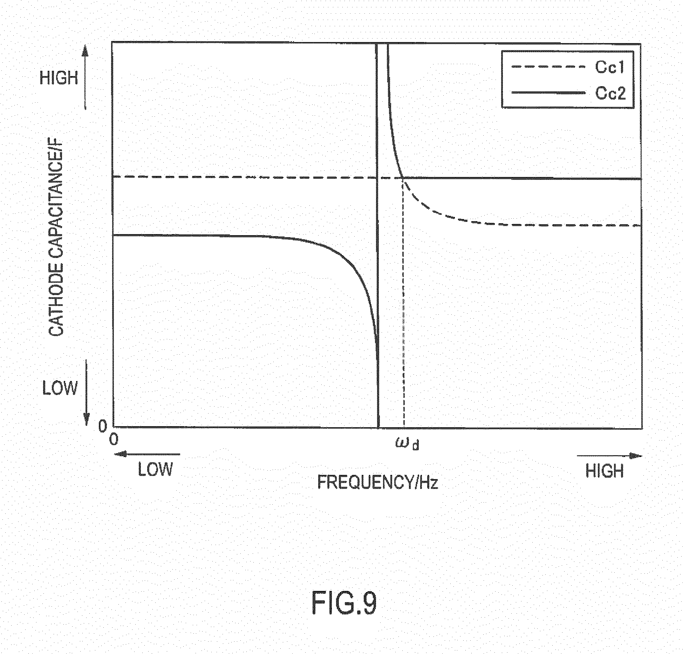

FIG. 9 shows frequency responses of the candidates $C_{c1}$ and $C_{c2}$ for the electrical double layer capacitance value of the cathode electrode 113. It should be noted that this graph is based on data of the candidates $C_{a1}$ and $C_{a2}$ for the electrical double layer capacitance value obtained by continuously changing the frequencies $\omega_1$ and $\omega_2$ calculated by an experiment or the like in advance in a range of the anode electrode response frequency band.
It should be noted that a line of $C_{c1}$ is represented by a broken line and a line of $C_{c2}$ is represented by a solid line. Further, a frequency $\omega_d$ is a frequency at which $(C_{a1}, R_{a1}) = (C_{a2}, R_{a2})$ for sets $(C_{a1}, R_{a1})$, $(C_{a2}, R_{a2})$ of the candidates for the reaction resistance value and the electrical double layer capacitance value of the anode electrode 112. Specifically, the inside of the radical sign in the above Equations (20), (21), (24) and (25) expressing $C_{a1}$, $R_{a1}$, $C_{a2}$ and $R_{a2}$ is 0.
As shown, in a region where the frequency $\omega < \omega_d$, the estimation value candidate $C_{c2}$ for the electrical double layer capacitance value is basically 0 or smaller and the value of $C_{c2}$ is extremely sensitive to a change of the frequency

immediately before $\omega_d$. Thus, in the region where the frequency $\omega < \omega_d$, $C_{c1}$ is a true estimation value which should be actually employed.

Accordingly, also for the electrical double layer capacitance value and the reaction resistance value of the cathode electrode 113, $C_{a1}$ and $R_{a1}$ corresponding to $C_{c1}$ are respectively employed in the region where the frequency $\omega < \omega_d$.

On the other hand, in a region where $\omega > \omega_d$, it is difficult to judge which of $C_{c1}$ and $C_{c2}$ should be employed only by looking at changes of the candidates ($C_{c1}$, $C_{c2}$) for the electrical double layer capacitance value of the cathode electrode 113. Accordingly, this judgment is made by directly studying the sets ($C_{a1}$, $R_{a1}$), ($C_{a2}$, $R_{a2}$) of the candidates for the reaction resistance value and the electrical double layer capacitance value of the anode electrode 112.

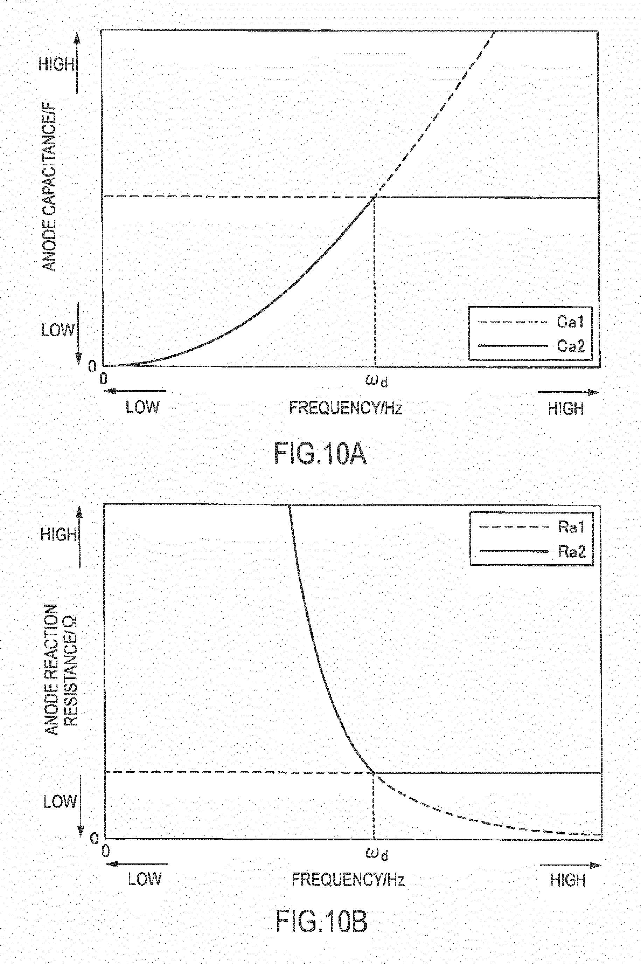

FIG. 10A shows frequency responses of the candidates $C_{a1}$, $C_{a2}$ for the electrical double layer capacitance value of the anode electrode 112. Further, FIG. 10B shows frequency responses of the candidates $R_{a1}$, $R_{a2}$ for the reaction resistance value of the anode electrode 112. It should be noted that these graphs are also based on data of the sets ($C_{a1}$, $R_{a1}$), ($C_{a2}$, $R_{a2}$) of the candidates obtained by continuously changing the frequencies $\omega_1$ and $\omega_2$ calculated by an experiment or the like in advance in the range of the anode electrode response frequency band.

With reference to FIG. 10A, in a region where the frequency $\omega > \omega_d$, the candidate $C_{a1}$ for the electrical double layer capacitance value of the anode electrode 112 is extremely sensitive to the frequency. Thus, in the region where $\omega > \omega_d$, $C_{a2}$ is a value which should be actually employed as a true estimation value of the electrical double layer capacitance value of the anode electrode 112. Therefore, in the region where the frequency $\omega > \omega_d$, $C_{a2}$ and $R_{a2}$ corresponding thereto should be respectively employed.

It should be noted that, as understood with reference to FIG. 10B, the candidate $R_{a2}$ for the reaction resistance value is extremely sensitive to a frequency change in a region of $\omega < \omega_d$ where the frequency $\omega_d$ is smaller. Thus, the candidate $R_{a1}$ for the reaction resistance value is judged to be a true estimation value which should be actually employed. Thus, in the region where the frequency $\omega < \omega_d$, $C_{a1}$ corresponding to $R_{a1}$ and $R_{a1}$ should be respectively employed. This point is found to match considerations based on the frequency response of the electrical double layer capacitance value of the cathode electrode 113.

Further, when the frequency $\omega = \omega d$, ($C_{a1}$, $R_{a1}$) = ($C_{a2}$, $R_{a2}$). Thus, it does not matter which of these sets of the candidates is employed as the set of the true candidates.

Based on the above considerations, it is found that values to be determined from the sets ($C_{a1}$, $R_{a1}$) and ($C_{a2}$, $R_{a2}$) of the candidates change according to the frequency in determining the true estimation values. Specifically, the appropriate one of the sets ($C_{a1}$, $R_{a1}$) and ($C_{a2}$, $R_{a2}$) of the candidates is determined according to the frequencies $\omega_1$, $\omega_2$ at two points in the anode electrode response frequency band and the magnitude of the frequency $\omega_d$. Further, if the determined estimation values of the electrical double layer capacitance value $C_a$ and reaction resistance value $R_a$ of the anode electrode 112 are substituted into Equation (3), the electrolyte membrane resistance value $R_m$ is obtained since the frequency $\omega$ and the real component $Z_r$ of the impedance measurement value are known.

Subsequent Steps S105 and S106 are performed as in the first embodiment to also estimate the reaction resistance value $R_c$ of the cathode electrode 113, using the estimation values of the electrical double layer capacitance value $C_a$ and reaction resistance value $R_a$ of the anode electrode 112 and the electrolyte membrane resistance value $R_m$ obtained in this way.

According to the state detection for the fuel cell 1 according to the present embodiment described above, only the anode electrode response impedances $Z(\omega_1)$ and $Z(\omega_2)$ are acquired as the high frequency impedances and the state quantities $C_a$ and $R_a$ of the anode electrode 112 are estimated on the basis of the anode electrode response impedances $Z(\omega_1)$ and $Z(\omega_2)$ by the controller 6 serving as the impedance acquisition unit and the internal state quantity estimation unit.

In this way, the state quantities $C_a$ and $R_a$ of the anode electrode 112 can be estimated while reducing a load to the controller 6 by omitting the estimation of the electrolyte membrane resistance value $R_m$ on the basis of the measurement of the electrolyte membrane response impedance and, finally, the reaction resistance value $R_c$, which is the state quantity of the cathode electrode 113, can be estimated.

(Fourth Embodiment)

A fourth embodiment is described. It should be noted that elements similar to those of the already described embodiments are denoted by the same reference signs.

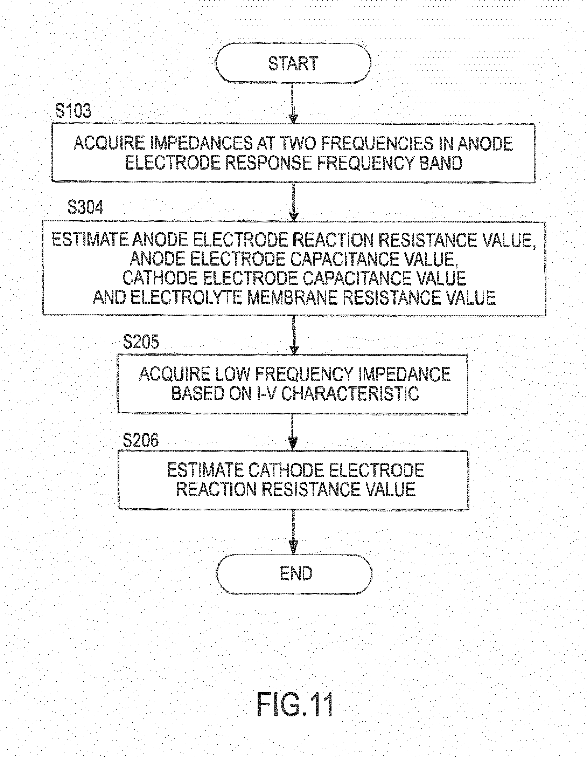

FIG. 11 is a flow chart showing the flow of state quantity estimation according to the present embodiment. As shown, in the present embodiment, the anode electrode response impedances $Z(\omega_1)$ and $Z(\omega_2)$ are obtained in Step S103 and the estimation values of the reaction resistance value $R_a$ and electrical double layer capacitance value $C_a$ of the anode electrode 112, the electrical double layer capacitance value $C_c$ of the cathode electrode 113 and the electrolyte membrane resistance value $R_m$ are obtained in Step 304 as in the third embodiment.

Thus, as in the second embodiment, the low frequency impedance $\Delta V/\Delta I$ is acquired on the basis of the I-V characteristic of the fuel cell 1 in Step S205 and the reaction resistance value $R_c$ of the cathode electrode 113 is estimated from the estimation values of the low frequency impedance $\Delta V/\Delta I$ and the electrolyte membrane resistance value $R_m$ in Step S206.

Accordingly, according to the state detection of the fuel cell 1 according to the present embodiment, the low frequency impedance $Z(\omega_L)$ can be estimated without being directly measured and the estimation of the electrolyte membrane resistance value $R_m$ on the basis of the measurement of the electrolyte membrane response impedance can be omitted. Thus, a load to the controller 6 can be further reduced.

(Fifth Embodiment)

A fifth embodiment is described. It should be noted that elements similar to those of the already described embodiments are denoted by the same reference signs.

In the present embodiment, measurement values of actual output voltage V and output current I are used to calculate the value of $\Delta V/\Delta I$ instead of a mode of storing the value of $\Delta V/\Delta I$ in the steady region P of the characteristic curve Cv1 in steady time of FIG. 7 in Step S205 according to the second and fourth embodiments.

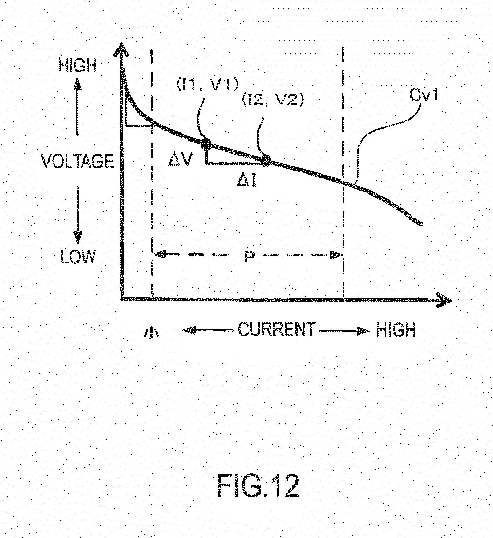

FIG. 12 shows an I-V characteristic curve of the fuel cell 1 in steady time. Particularly, in the present embodiment, the gradient $\Delta V/\Delta I$ is calculated by calculating $-(V_1-V_2)/(I_1-I_2)$ for output currents $I_1$, $I_2$ measured by the current sensor 51 at predetermined measurement timings and output voltages $V_1$, $V_2$ measured by the voltage sensor 52 at the same predetermined measurement timings.

Specifically, the gradient $\Delta V/\Delta I$ regarded as the low frequency impedance is determined according to the measurement values of the output currents and the output voltages.

In the present embodiment, the gradient $\Delta V/\Delta I$ in the I-V characteristic curve of the fuel cell 1 is calculated on the basis of two sets $(I_1, V_1)$, $(I_2, V_2)$ of the measurement values of the current and the voltage as just described. In this way, the value of $\Delta V/\Delta I$ more accurately reflecting an actual characteristic than in the case of using the gradient $\Delta V/\Delta I$ regarded and determined as a constant value in the steady region P can be obtained. As a result, the accuracy of the estimation value of the reaction resistance value $R_c$ of the cathode electrode 113 calculated assuming this value of $\Delta V/\Delta I$ as the low frequency impedance is also improved.

(Sixth Embodiment)

A sixth embodiment is described. It should be noted that elements similar to those of the already described embodiments are denoted by the same reference signs.

In the present embodiment, in order to obtain the gradient $\Delta V/\Delta I$ in the I-V characteristic curve, the gradient $\Delta V/\Delta I$ in the I-V characteristic curve is calculated using one set $(I_3, V_3)$ of measurement values of the output current and the output voltage and one set $(I_{set}, V_{set})$ set beforehand instead of measuring two sets $(I_1, V_1)$, $(I_2, V_2)$ of the measurement values of the output current and the output voltage as in the fifth embodiment.

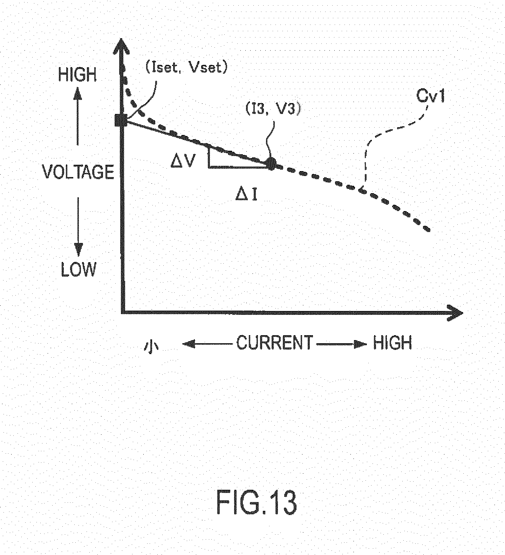

FIG. 13 is a graph showing an example of a method for setting one set of current and voltage for the calculation of the gradient $\Delta V/\Delta I$ in the I-V characteristic curve. It should be noted that, in this graph, the characteristic curve Cv1 in steady time is shown by a broken line to clarify the drawing. As shown, a point shown by a black square of FIG. 13 is equivalent to $(I_{set}, V_{set})$ described above in the present embodiment. Particularly, $I_{set} = 0$.

Accordingly, the value of the gradient $\Delta V/\Delta I$ is calculated by calculating $-(V_{set}-V_3)/(I_{set}-I_3)$ on the basis of the above measurement values $(I_3, V3)$ and the preset values $(I_{set}, V_{set})$.

As described above, according to the present embodiment, the value of the gradient $\Delta V/\Delta I$ in the I-V characteristic curve is calculated on the basis of one set $(I_3, V_3)$ of the measurement values of the current and the voltage and one set $(I_{set}, V_{set})$ of the values of the current and the voltage set beforehand.

Accordingly, in calculating the gradient $\Delta V/\Delta I$ in the I-V characteristic curve of the fuel cell 1, it is possible to ensure calculation accuracy of a specified level or higher by using the measurement values $(I_3, V_3)$ at one point while suppressing the amount of calculation using $(I_{set}, V_{set})$ set beforehand at another point out of two points on the I-V characteristic curve used to calculate the value of the gradient.

(Seventh Embodiment)

A seventh embodiment is described. It should be noted that elements similar to those of the already described embodiments are denoted by the same reference signs.

In the present embodiment, in the measurement of the impedance of the fuel cell 1 performed in the first embodiment and the like, an excitation current application method in which a current I is supplied from a predetermined current source for measurement to the fuel cell 1 and an impedance $Z = V/I$ is calculated on the basis of this supplied current I and an output voltage V is employed instead of the configuration for measuring the output current I and the output voltage V superimposed with the alternating-current signal.

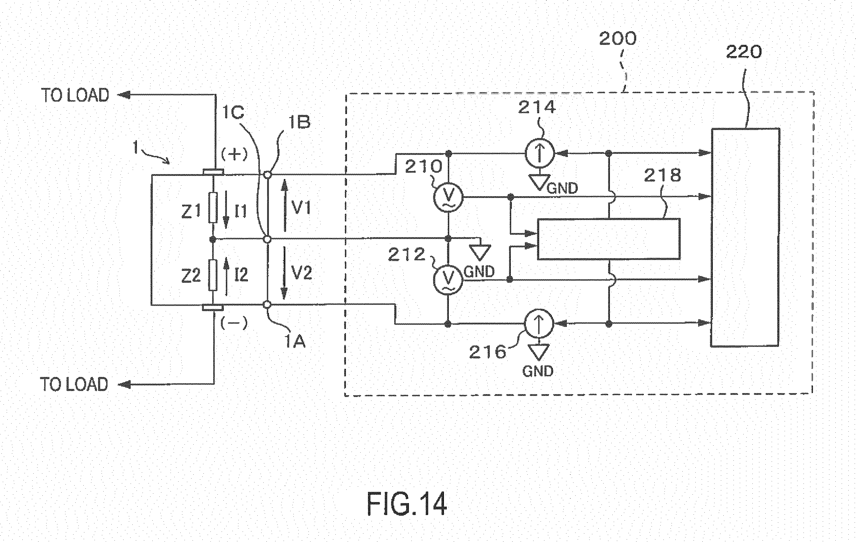

FIG. 14 is a block diagram schematically showing a main part relating to an impedance measurement in a fuel cell system 100 according to the present embodiment.

As shown, the fuel cell system 100 according to the present embodiment includes an applied alternating current adjustment unit 200 configured to apply an alternating current to a fuel cell 1 while adjusting the alternating current.

The applied alternating current adjustment unit 200 is connected to an intermediate terminal 1C besides a positive electrode terminal (cathode electrode side terminal) 1B and a negative electrode terminal (anode electrode side terminal) 1A of a fuel cell 1 configured as a stack. It should be noted that a part connected to the intermediate terminal 1C is grounded as shown.

The applied alternating current adjustment unit 200 includes a positive electrode side voltage measurement sensor 210 configured to measure a positive electrode side alternating-current potential difference V1 of the positive electrode terminal 1B with respect to the intermediate terminal 1C and a negative electrode side voltage measurement sensor 212 configured to measure a negative electrode side alternating-current potential difference V2 of the negative electrode terminal 1A with respect to the intermediate terminal 1C.

Further, the applied alternating current adjustment unit 200 includes a positive electrode side alternating-current power supply unit 214 configured to apply an alternating current I1 to a circuit composed of the positive electrode terminal 1B and the intermediate terminal 1C, a negative electrode side alternating-current power supply unit 216 configured to apply an alternating current 12 to a circuit composed of the negative electrode terminal 1A and the intermediate terminal 1C, a controller 218 configured to adjust amplitudes and phases of these alternating currents 11 and 12, and a calculation unit 220 configured to calculate an impedance Z of the fuel cell 1 on the basis of the electrode side alternating-current potential differences V1, V2 and the alternating currents I1, 12.

In the present embodiment, the controller 218 adjusts the amplitudes and phases of the alternating currents I1 and I2 such that the positive electrode side alternating-current potential difference V1 and the negative electrode side alternating-current potential difference V2 become equal. It should be noted that this controller 218 may be configured by the controller 6 shown in FIG. 3.

Further, the calculation unit 220 includes hardware such as an unillustrated AD converter and a microcomputer chip and software configuration such as a program for calculating the impedance, calculates an impedance Z1 from the intermediate terminal 1C to the positive electrode terminal 1B by dividing the positive electrode side alternating-current potential difference V1 by the alternating current I1 and calculates an impedance Z2 from the intermediate terminal 1C to the negative electrode terminal 1A by dividing the negative electrode side alternating-current potential difference V2 by the alternating current 12. Furthermore, the calculation unit 220 calculates the total impedance Z of the fuel cell 1 by taking the sum of the impedances Z1 and Z2.

According to a state detection device for fuel cell according to the above embodiment, the following effects can be obtained.

The state detection device for fuel cell according to the present embodiment includes the alternating-current power supply units 214, 216 connected to the fuel cell 1 and configured to output the alternating currents I1, 12 to the fuel cell 1, the controller 218 serving as an alternating current adjustment unit configured to adjust the alternating currents I1, 12 on the basis of the positive electrode side alternating-current potential difference V1, which is a potential difference obtained by subtracting the potential of the intermediate terminal 1C from the potential of the positive electrode terminal 1B of the fuel cell 1, and the negative electrode side alternating-current potential difference V2, which is a potential difference obtained by subtracting the potential of the intermediate terminal 1C from the potential of the negative electrode terminal 1A of the fuel cell 1, and the impedance calculation unit 220 configured to calculate the impedance Z of the fuel cell 1 on the basis of the adjusted alternating currents I1, I2 and the positive electrodes alternating-current potential difference V1 and the negative electrode side alternating-current potential difference V2.

The controller 218 adjusts the amplitudes and phases of the alternating current I1 applied by the positive electrode side alternating-current power supply unit 214 and the alternating current 12 applied by the negative electrode side alternating-current power supply unit 216 such that the positive electrode side alternating-current potential difference V1 on the positive electrode side of the fuel cell 1 and the negative electrode side alternating-current potential difference V2 on the negative electrode side substantially match. Since the amplitude of the positive electrode side alternating-current potential difference V1 and that of the negative electrode side alternating-current potential difference V2 become equal in this way, the positive electrode terminal 1B and the negative electrode terminal 1A are substantially at an equal potential. Thus, the alternating currents I1, 12 for the impedance measurement are prevented from flowing to a load 53, wherefore the influence of the fuel cell 1 on power generation is prevented.

Further, in the case of carrying out the above impedance measurement when the fuel cell 1 is in a power generation state, an alternating-current potential for measurement is superimposed on a voltage generated by this power generation. Thus, the values of the positive electrode side alternating-current potential difference V1 and the negative electrode side alternating-current potential difference V2 themselves become larger. However, since the phases and amplitudes of the positive electrode side alternating-current potential difference V1 and the negative electrode side alternating-current potential difference V2 themselves do not change, a highly accurate impedance measurement can be carried out as in the case where the fuel cell 1 is not in the power generation state.

Although the embodiments of the present invention have been described above, the above embodiments are merely an illustration of some application examples of the present invention and not intended to limit the technical scope of the present invention to the specific configurations of the above embodiments. For example, the steps of acquiring the anode electrode response impedance, the electrolyte membrane response impedance and the low frequency impedance (Steps, S101, S103 and S105) and the like in each embodiment can be arbitrarily changed without being limited to the sequence of the steps described in each embodiment.

For example, each state quantity may be estimated after all the steps of acquiring the anode electrode response impedance, the electrolyte membrane response impedance and the low frequency impedance are performed.

Further, the modes of estimating a plurality of internal state quantities in the fuel cell 1 are not limited to the modes described in each of the above embodiments.

For example, instead of the mode of selecting one frequency $\omega_L$ from the low frequency band in Step S105 in the first or third embodiment, two frequencies $\omega_{L1}$, $\omega_{L2}$ may be selected in the low frequency band and low frequency impedances $Z(\omega_{L1})$ and $Z(\omega_{L2})$ may be obtained. In this way, not only the estimation value of the reaction resistance $R_c$ of the cathode electrode 113, but also that of the electrical double layer capacitance $C_c$ of the cathode electrode 113 can be finally obtained.

Further, the mode of the simplified equivalent circuit of the fuel cell 1 is also not limited to that used in each of the above embodiments. For example, an equivalent circuit including other elements such as a diffusion resistance, an electron transport resistance and an ionomer resistance besides the circuit elements such as the reaction resistance and the electrical double layer capacitance of each electrode described in each of the above embodiments may be set, and a diffusion resistance value, an electron transport resistance value, an ionomer resistance value and the like serving as internal state quantities based on these other elements may be estimated.

**Claims**

1. A fuel cell state detection device which determines the internal state of a fuel cell (1) for generating power upon receiving a supply of anode gas and cathode gas, comprising:

   an impedance acquisition unit configured to acquire a first frequency impedance and a second frequency impedance,
   the first frequency impedance being based on a frequency selected from a first frequency band, the second frequency impedance being based on a frequency selected from a second frequency band, wherein the first frequency band is higher than the second frequency band;
   **characterized by**
   the first frequency band including a frequency band which shows responsiveness at least to a state quantity including a reaction resistance value of an anode electrode (112), the second frequency band including a frequency band which shows responsiveness at least to a state quantity including a reaction resistance value of a cathode electrode (113); and
   an internal state quantity estimation unit configured to estimate, using an equation obtained based on an equivalent circuit of the fuel cell, each of the state quantity of the anode electrode (112) and the state quantity of the cathode electrode (113) by combining the acquired first frequency impedance and second frequency impedance, the state quantity of the anode electrode (112) and the state quantity of the cathode electrode (113) serving as internal states of the fuel cell (1).

2. The fuel cell state detection device according to claim 1, wherein the internal state quantity estimation unit:

   estimates a certain internal state quantity on the basis of the first frequency impedance and estimates another internal state quantity on the basis of the estimated internal state quantity and the second frequency impedance; or
   estimates a certain internal state quantity on the basis of the second frequency impedance and estimates another internal state quantity on the basis of the estimated internal state quantity and the first frequency impedance.

3. The fuel cell state detection device according to claim 1 or 2, wherein
   the first frequency band includes an anode electrode response frequency band and an electrolyte membrane response frequency band, the anode electrode response frequency band being a frequency band which shows responsiveness to a state quantity of the anode electrode (112) of the fuel cell (1), the electrolyte membrane response frequency band being a frequency band higher than the anode electrode response frequency band and which shows responsiveness to a state quantity of an electrolyte membrane of the fuel cell (1); and
the impedance acquisition unit acquires at least either one of an anode electrode response impedance based on a frequency selected from the anode electrode response frequency band and an electrolyte membrane response impedance based on a frequency selected from the electrolyte membrane response frequency band as the first frequency impedance.

4. The fuel cell state detection device according to claim 3, wherein:

the impedance acquisition unit acquires both the anode electrode response impedance and the electrolyte membrane response impedance as the first frequency impedances; and
the internal state quantity estimation unit estimates the state quantity of the electrolyte membrane on the basis of the electrolyte membrane response impedance and estimates the state quantity of the anode electrode (112) on the basis of the estimated state quantity of the electrolyte membrane and the anode electrode response impedance.

5. The fuel cell state detection device according to claim 3, wherein:

the impedance acquisition unit acquires only the anode electrode response impedance as the first frequency impedance; and
the internal state quantity estimation unit estimates the state quantity of the anode electrode (112) on the basis of the anode electrode response impedance.

6. The fuel cell state detection device according to claim 4, wherein:

the state quantity of the anode electrode (112) include a reaction resistance value and an electrical double layer capacitance value of the anode electrode (112);
the state quantity of the cathode electrode (113) include a reaction resistance value and an electrical double layer capacitance value of the cathode electrode (113); and
the internal state quantity estimation unit:

estimates the reaction resistance value of the anode electrode (112) and the electrical double layer capacitance value of the anode electrode (112) on the basis of the anode electrode response impedance; and
estimates at least either one of the reaction resistance value and the electrical double layer capacitance value of the cathode electrode (113) on the basis of the estimated state quantity of the electrolyte membrane, reaction resistance value of the anode electrode (112), electrical double layer capacitance value of the anode electrode (112) and the second frequency impedance.

7. The fuel cell state detection device according to any one of claims 1 to 6, wherein:
the impedance acquisition unit acquires a value of a gradient in an I-V characteristic curve of the fuel cell (1) as the second frequency impedance.

8. The fuel cell state detection device according to claim 7, wherein:
the impedance acquisition unit acquires the value of the gradient as the second frequency impedance in steady time during which a variation of the value of the gradient in the I-V characteristic curve of the fuel cell (1) is not larger than a predetermined value.

9. The fuel cell state detection device according to claim 7 or 8, wherein:
the gradient in the I-V characteristic curve is calculated on the basis of two sets of measurement values of a current and a voltage.

10. The fuel cell state detection device according to claim 7 or 8, wherein:
the gradient in the I-V characteristic curve is calculated on the basis of one set of measurement values of a current and a voltage and one set of current and voltage values set beforehand.

11. The fuel cell state detection device according to any one of claims 1 to 10, wherein:

the fuel cell (1) is configured as a laminated battery; and
the state detection device comprises:

an alternating-current power supply unit connected to the laminated battery and configured to output an alternating current to the laminated battery;
an alternating current adjustment unit configured to adjust the alternating current on the basis of a positive electrode side alternating-current potential difference and a negative electrode side alternating-current potential difference, the positive electrode side alternating-current potential difference being a potential difference obtained by subtracting a potential of an intermediate part of the laminated battery from a potential on a positive electrode side of the laminated battery, the negative electrode side alternating-current potential difference being a potential difference obtained by subtracting the potential of the intermediate part of the laminated battery from a potential on a negative electrode side of the laminated battery; and
an impedance calculation unit configured to calculate an impedance measurement value of the fuel cell (1) on the basis of the adjusted alternating current and the positive electrode side alternating-current potential difference and the negative electrode side alternating-current potential difference.

12. A fuel cell state detection method which determines the internal state of a fuel cell (1) for generating power upon receiving a supply of anode gas and cathode gas, comprising:

a step of acquiring a first frequency impedance and a second frequency impedance,
the first frequency impedance band being based on a frequency selected from a first frequency band, the second frequency impedance being based on a frequency selected from a second frequency band, wherein the first frequency band is higher than the second frequency band;
**characterized by**
the first frequency band including a frequency band which shows responsiveness at least to a state quantity including a reaction resistance value of an anode electrode, the second frequency band including a frequency band which shows responsiveness at least to a state quantity including a reaction resistance value of a cathode electrode (113); and
a step of estimating each of the state quantity of the anode electrode (112) and the state quantity of the cathode electrode (113), using an equation obtained based on an equivalent circuit of the fuel cell, serving as internal states of the fuel cell (1) by combining the acquired first frequency impedance and second frequency impedance.

## Patentansprüche

1. Brennstoffzellen-Zustandserkennungsvorrichtung, die den internen Zustand einer Brennstoffzelle (1) zur Erzeugung von Energie beim Erhalt einer Zufuhr von Anodengas und Kathodengas, umfassend:

eine Impedanz-Erfassungseinheit, die konfiguriert ist, eine erste Frequenzimpedanz und eine zweite Frequenzimpedanz zu erfassen,
wobei die erste Frequenzimpedanz auf einer Frequenz basiert, die aus einem ersten Frequenzband ausgewählt ist, und die zweite Frequenzimpedanz auf einer Frequenz basiert, die aus einem zweiten Frequenzband ausgewählt ist, wobei das erste Frequenzband höher als das zweite Frequenzband ist;
**dadurch gekennzeichnet, dass**
das erste Frequenzband ein Frequenzband beinhaltet, das ein Ansprechverhalten zumindest auf eine Zustandsgröße einschließlich eines Reaktionswiderstands einer Anodenelektrode (112) zeigt, und das zweite Frequenzband ein Frequenzband beinhaltet, das ein Ansprechverhalten zumindest auf eine Zustandsgröße einschließlich eines Reaktionswiderstands einer Kathodenelektrode (113) zeigt; und durch
eine Internzustandsgrößen-Schätzeinheit, die konfiguriert ist, unter Nutzung einer Gleichung, die auf Grundlage einer Ersatzschaltung der Brennstoffzelle erhalten wurde, jede der Zustandsgröße der Anodenelektrode (112) und der Zustandsgröße der Kathodenelektrode (113) zu schätzen, indem die erfasste erste Frequenzimpedanz und zweite Frequenzimpedanz kombiniert werden, wobei die Zustandsgröße der Anodenelektrode (112) und die Zustandsgröße der Kathodenelektrode (113) als interne Zustände der Brennstoffzelle (1) dienen.

2. Brennstoffzellen-Zustandserkennungsvorrichtung nach Anspruch 1, wobei die Internzustandsgrößen-Schätzeinheit:

eine bestimmte interne Zustandsgröße auf Grundlage der ersten Frequenzimpedanz schätzt und eine andere interne Zustandsgröße auf Grundlage der geschätzten internen Zustandsgröße und der zweiten Frequenzimpedanz schätzt; oder

eine bestimmte interne Zustandsgröße auf Grundlage der zweiten Frequenzimpedanz schätzt und eine andere interne Zustandsgröße auf Grundlage der geschätzten internen Zustandsgröße und der ersten Frequenzimpedanz schätzt.

3. Brennstoffzellen-Zustandserkennungsvorrichtung nach Anspruch 1 oder 2, wobei

das erste Frequenzband ein Anodenelektroden-Ansprechfrequenzband und ein Elektrolytmembran-Ansprechfrequenzband beinhaltet, wobei das Anodenelektroden-Ansprechfrequenzband ein Frequenzband ist, das ein Ansprechverhalten auf eine Zustandsgröße der Anodenelektrode (112) der Brennstoffzelle (1) zeigt, und das Elektrolytmembran-Ansprechfrequenzband ein Frequenzband ist, das höher als das Anodenelektroden-Ansprechfrequenzband ist und ein Ansprechverhalten auf eine Zustandsgröße einer Elektrolytmembran der Brennstoffzelle (1) zeigt; und

die Impedanz-Erfassungseinheit zumindest eine von einer Anodenelektroden-Ansprechimpedanz auf Grundlage einer Frequenz, die aus dem Anodenelektroden-Ansprechfrequenzband gewählt ist, und einer Elektrolytmembran-Ansprechimpedanz auf Grundlage einer Frequenz, die aus dem Elektrolytmembran-Ansprechfrequenzband gewählt ist, als die erste Frequenzimpedanz erfasst.

4. Brennstoffzellen-Zustandserkennungsvorrichtung nach Anspruch 3, wobei:

die Impedanz-Erfassungseinheit sowohl die Anodenelektroden-Ansprechimpedanz als auch die Elektrolytmembran-Ansprechimpedanz als die erste Frequenzimpedanz erfasst; und

die Internzustandsgrößen-Schätzeinheit die Zustandsgröße der Elektrolytmembran auf Grundlage der Elektrolytmembran-Ansprechimpedanz schätzt und die Zustandsgröße der Anodenelektrode (112) auf Grundlage der geschätzten Zustandsgröße der Elektrolytmembran und der Anodenelektroden-Ansprechimpedanz schätzt.

5. Brennstoffzellen-Zustandserkennungsvorrichtung nach Anspruch 3, wobei:

die Impedanz-Erfassungseinheit nur die Anodenelektroden-Ansprechimpedanz als die erste Frequenzimpedanz erfasst; und

die Internzustandsgrößen-Schätzeinheit die Zustandsgröße der Anodenelektrode (112) auf Grundlage der Anodenelektroden-Ansprechimpedanz schätzt.

6. Brennstoffzellen-Zustandserkennungsvorrichtung nach Anspruch 4, wobei:

die Zustandsgröße der Anodenelektrode (112) einen Reaktionswiderstandswert und einen elektrischen Doppelschicht-Kapazitätswert der Anodenelektrode (112) beinhaltet;

die Zustandsgröße der Kathodenelektrode (113) einen Reaktionswiderstandswert und einen elektrischen Doppelschicht-Kapazitätswert der Kathodenelektrode (113) beinhaltet; und

die Internzustandsgrößen-Schätzeinheit:

den Reaktionswiderstandswert der Anodenelektrode (112) und den elektrischen Doppelschicht-Kapazitätswert der Anodenelektrode (112) auf Grundlage der Anodenelektroden-Ansprechimpedanz schätz; und

zumindest einen des Reaktionswiderstandwerts und des elektrischen Doppelschicht-Kapazitätswert der Kathodenelektrode (113) schätzt, auf Grundlage der geschätzten Zustandsgröße der Elektrolytmembran, des Reaktionswiderstands der Anodenelektrode (112), der elektrischen Doppelschicht-Kapazität der Anodenelektrode (112) und der zweiten Frequenzimpedanz.

7. Brennstoffzellen-Zustandserkennungsvorrichtung nach einem der Ansprüche 1 bis 6, wobei

die Impedanz-Erfassungseinheit einen Wert eines Gradienten in einer I-V Kennlinie der Brennstoffzelle (1) als die zweite Frequenzimpedanz erfasst.

8. Brennstoffzellen-Zustandserkennungsvorrichtung nach Anspruch 7, wobei

die Impedanz-Erfassungseinheit den Wert des Gradienten als die zweite Frequenzimpedanz in einer stabilen Zeit erfasst, in der eine Änderung des Werts des Gradienten in der I-V Kennlinie der Brennstoffzelle (1) nicht größer als ein vorbestimmter Wert ist.

9. Brennstoffzellen-Zustandserkennungsvorrichtung nach Anspruch 7 oder 8, wobei

der Gradient in der I-V Kennlinie auf Grundlage von zwei Sätzen von Messwerten einer Stromstärke und einer Spannung berechnet wird.

**10.** Brennstoffzellen-Zustandserkennungsvorrichtung nach Anspruch 7 oder 8, wobei:
der Gradient in der I-V Kennlinie auf Grundlage eines Satzes von Messwerten einer Stromstärke und einer Spannung und einem Satz von Stromstärke und Spannung, die im Voraus festgelegt wurden, berechnet wird.

**11.** Brennstoffzellen-Zustandserkennungsvorrichtung nach einem der Ansprüche 1 bis 10, wobei:

die Brennstoffzelle (1) als laminierte Batterie konfiguriert ist; und
die Zustandserkennungsvorrichtung umfasst:

eine Wechselstrom-Energieversorgungseinheit, die mit der laminierten Batterie verbunden ist und konfiguriert ist, einen Wechselstrom an die laminierte Batterie auszugeben;
eine Wechselstrom-Anpassungseinheit, die konfiguriert ist, den Wechselstrom anzupassen, auf Grundlage einer Wechselstrom-Potentialdifferent einer positiven Elektrodenseite und einer Wechselstrom-Potentialdifferenz einer negativen Elektrodenseite, wobei die Wechselstrom-Potentialdifferent der positiven Elektrodenseite eine Potentialdifferenz ist, die durch Subtraktion eines Potentials eines Zwischenabschnitts der laminierten Batterie von einem Potential an einer positiven Elektrodenseite der laminierten Batterie erhalten wird, und die Wechselstrom-Potentialdifferenz der negativen Elektrodenseite eine Potentialdifferent ist, die durch Subtraktion des Potentials des Zwischenabschnitts der laminierten Batterie von einem Potential an einer negativen Elektrodenseite der laminierten Batterie erhalten wird; und
eine Impedanz-Berechnungseinheit, die konfiguriert ist, einen Impedanzmesswert der Brennstoffzelle (1) zu berechnen, auf Grundlage des angepassten Wechselstroms und der Wechselstrom-Potentialdifferent der positiven Elektrodenseite und der Wechselstrom-Potentialdifferenz der negativen Elektrodenseite.

**12.** Brennstoffzellen-Zustandserkennungsverfahren, das den internen Zustand einer Brennstoffzelle (1) zur Erzeugung von Energie beim Erhalt einer Zufuhr von Anodengas und Kathodengas bestimmt, umfassend:

einen Schritt zur Erfassung einer ersten Frequenzimpedanz und einer zweiten Frequenzimpedanz, wobei die erste Frequenzimpedanz auf einer Frequenz basiert, die aus einem ersten Frequenzband ausgewählt ist, und die zweite Frequenzimpedanz auf einer Frequenz basiert, die aus einem zweiten Frequenzband ausgewählt ist, wobei das erste Frequenzband höher als das zweite Frequenzband ist;
**dadurch gekennzeichnet, dass**
das erste Frequenzband ein Frequenzband beinhaltet, das ein Ansprechverhalten zumindest auf eine Zustandsgröße einschließlich eines Reaktionswiderstands einer Anodenelektrode zeigt, und das zweite Frequenzband ein Frequenzband beinhaltet, das ein Ansprechverhalten zumindest auf eine Zustandsgröße einschließlich eines Reaktionswiderstands einer Kathodenelektrode (113) zeigt; und durch
einen Schritt zum Schätzen von jeder der Zustandsgröße der Anodenelektrode (112) und der Zustandsgröße der Kathodenelektrode (113), die als interne Zustände der Brennstoffzelle dienen, unter Nutzung einer Gleichung, die auf Grundlage einer Ersatzschaltung der Brennstoffzelle erhalten wurde, indem die erfasste erste Frequenzimpedanz und zweite Frequenzimpedanz kombiniert werden.

**Revendications**

**1.** Dispositif de détection d'état de pile à combustible qui détermine l'état interne d'une pile à combustible (1) pour générer de l'énergie à réception d'une alimentation en gaz d'anode et en gaz de cathode, comprenant :

une unité d'acquisition d'impédance configurée pour acquérir une première impédance de fréquence et une seconde impédance de fréquence,
la première impédance de fréquence étant basée sur une fréquence choisie dans une première bande de fréquences, la seconde impédance de fréquence étant basée sur une fréquence choisie dans une seconde bande de fréquences, la première bande de fréquences étant supérieure à la seconde bande de fréquences ;
**caractérisé par**
la première bande de fréquences incluant une bande de fréquences qui est sensible au moins à une grandeur d'état incluant une valeur de résistance de réaction d'une électrode formant anode (112), la seconde bande de fréquences incluant une bande de fréquences qui est sensible au moins à une grandeur d'état incluant une valeur de résistance de réaction d'une électrode formant cathode (113) ; et

une unité d'estimation de grandeur d'état interne configurée pour estimer, à l'aide d'une équation obtenue sur la base d'un circuit équivalent de la pile à combustible, la grandeur d'état de l'électrode formant anode (112) et la grandeur d'état de l'électrode formant cathode (113), respectivement, en combinant la première impédance de fréquence et la seconde impédance de fréquence acquises, la grandeur d'état de l'électrode formant anode (112) et la grandeur d'état de l'électrode formant cathode (113) étant prises comme états internes de la pile à combustible (1).

2. Dispositif de détection d'état de pile à combustible selon la revendication 1, dans lequel l'unité d'estimation de grandeur d'état interne :

estime une grandeur d'état interne donnée sur la base de la première impédance de fréquence et estime une autre grandeur d'état interne sur la base de la grandeur d'état interne estimée et de la seconde impédance de fréquence ; ou
estime une grandeur d'état interne donnée sur la base de la seconde impédance de fréquence et estime une autre grandeur d'état interne sur la base de la grandeur d'état interne estimée et de la première impédance de fréquence.

3. Dispositif de détection d'état de pile à combustible selon la revendication 1 ou 2, dans lequel
la première bande de fréquences inclut une bande de fréquences de réponse d'électrode formant anode et une bande de fréquences de réponse de membrane électrolyte, la bande de fréquences de réponse d'électrode formant anode étant une bande de fréquences qui est sensible à une grandeur d'état de l'électrode formant anode (112) de la pile à combustible (1), la bande de fréquences de réponse de membrane électrolyte étant une bande de fréquences supérieure à la bande de fréquences de réponse d'électrode formant anode et qui est sensible à une grandeur d'état d'une membrane électrolyte de la pile à combustible (1) ; et
l'unité d'acquisition d'impédance acquiert au moins une impédance de réponse d'électrode formant anode basée sur une fréquence choisie dans la bande de fréquences de réponse d'électrode formant anode ou une impédance de réponse de membrane électrolyte basée sur une fréquence choisie dans la bande de fréquences de réponse de membrane électrolyte en tant que première impédance de fréquence.

4. Dispositif de détection d'état de pile à combustible selon la revendication 3, dans lequel :

l'unité d'acquisition d'impédance acquiert à la fois l'impédance de réponse d'électrode formant anode et l'impédance de réponse de membrane électrolyte en tant que premières impédances de fréquence ; et
l'unité d'estimation de grandeur d'état interne estime la grandeur d'état de la membrane électrolyte sur la base de l'impédance de réponse de membrane électrolyte et estime la grandeur d'état de l'électrode formant anode (112) sur la base de la grandeur d'état estimée de la membrane électrolyte et de l'impédance de réponse d'électrode formant anode.

5. Dispositif de détection d'état de pile à combustible selon la revendication 3, dans lequel :

l'unité d'acquisition d'impédance acquiert uniquement l'impédance de réponse d'électrode formant anode en tant que première impédance de fréquence ; et
l'unité d'estimation de grandeur d'état interne estime la grandeur d'état de l'électrode formant anode (112) sur la base de l'impédance de réponse d'électrode formant anode.

6. Dispositif de détection d'état de pile à combustible selon la revendication 4, dans lequel :

la grandeur d'état de l'électrode formant anode (112) inclut une valeur de résistance de réaction et une valeur de capacité de double couche électrique de l'électrode formant anode (112) ;
la grandeur d'état de l'électrode formant cathode (113) inclut une valeur de résistance de réaction et une valeur de capacité de double couche électrique de l'électrode formant cathode (113) ; et
l'unité d'estimation de grandeur d'état interne :

estime la valeur de résistance de réaction de l'électrode formant anode (112) et la valeur de capacité de double couche électrique de l'électrode formant anode (112) sur la base de l'impédance de réponse d'électrode formant anode ; et
estime au moins la valeur de résistance de réaction ou la valeur de capacité de double couche électrique de l'électrode formant cathode (113) sur la base de la grandeur d'état estimée de la membrane électrolyte, de la valeur de résistance de réaction de l'électrode formant anode (112), de la valeur de capacité de double couche électrique de l'électrode formant anode (112) et de la seconde impédance de fréquence.

7. Dispositif de détection d'état de pile à combustible selon l'une quelconque des revendications 1 à 6, dans lequel : l'unité d'acquisition d'impédance acquiert une valeur d'un gradient dans une courbe caractéristique courant-tension de la pile à combustible (1) en tant que seconde impédance de fréquence.

8. Dispositif de détection d'état de pile à combustible selon la revendication 7, dans lequel : l'unité d'acquisition d'impédance acquiert la valeur du gradient en tant que seconde impédance de fréquence dans une période stable pendant laquelle la variation de la valeur du gradient dans la courbe caractéristique courant-tension de la pile à combustible (1) ne dépasse pas une valeur prédéterminée.

9. Dispositif de détection d'état de pile à combustible selon la revendication 7 ou 8, dans lequel : le gradient dans la courbe caractéristique courant-tension est calculé sur la base de deux ensembles de valeurs de mesure d'un courant et d'une tension.

10. Dispositif de détection d'état de pile à combustible selon la revendication 7 ou 8, dans lequel : le gradient dans la courbe caractéristique courant-tension est calculé sur la base d'un ensemble de valeurs de mesure d'un courant et d'une tension et d'un ensemble de valeurs de courant et de tension préalablement définies.

11. Dispositif de détection d'état de pile à combustible selon l'une quelconque des revendications 1 à 10, dans lequel :

   la pile à combustible (1) est configurée en tant que batterie stratifiée ; et
   le dispositif de détection d'état comprend :

      une unité d'alimentation en courant alternatif connectée à la batterie stratifiée et configurée pour fournir en sortie un courant alternatif à la batterie stratifiée ;
      une unité d'ajustement de courant alternatif configurée pour ajuster le courant alternatif sur la base d'une différence de potentiel de courant alternatif côté électrode positive et d'une différence de potentiel de courant alternatif côté électrode négative, la différence de potentiel de courant alternatif côté électrode positive étant une différence de potentiel obtenue en soustrayant un potentiel d'une partie intermédiaire de la batterie stratifiée d'un potentiel d'un côté électrode positive de la batterie stratifiée, la différence de potentiel de courant alternatif côté électrode négative étant une différence de potentiel obtenue en soustrayant le potentiel de la partie intermédiaire de la batterie stratifiée d'un potentiel d'un côté électrode négative de la batterie stratifiée ; et
      une unité de calcul d'impédance configurée pour calculer une valeur de mesure d'impédance de la pile à combustible (1) sur la base du courant alternatif ajusté ainsi que de la différence de potentiel de courant alternatif côté électrode positive et de la différence de potentiel de courant alternatif côté électrode négative.

12. Procédé de détection d'état de pile à combustible qui détermine l'état interne d'une pile à combustible (1) pour générer de l'énergie à réception d'une alimentation en gaz d'anode et en gaz de cathode, comprenant :

   une étape d'acquisition d'une première impédance de fréquence et d'une seconde impédance de fréquence, la première impédance de fréquence étant basée sur une fréquence choisie dans une première bande de fréquences, la seconde impédance de fréquence étant basée sur une fréquence choisie dans une seconde bande de fréquences, la première bande de fréquences étant supérieure à la seconde bande de fréquences ;
   **caractérisé par**
   la première bande de fréquences incluant une bande de fréquences qui est sensible au moins à une grandeur d'état incluant une valeur de résistance de réaction d'une électrode formant anode, la seconde bande de fréquences incluant une bande de fréquences qui est sensible au moins à une grandeur d'état incluant une valeur de résistance de réaction d'une électrode formant cathode (113) ; et
   une étape d'estimation de la grandeur d'état de l'électrode formant anode (112) et de la grandeur d'état de l'électrode formant cathode (113), respectivement, à l'aide d'une équation obtenue sur la base d'un circuit équivalent de la pile à combustible, qui sont prises comme états internes de la pile à combustible (1) en combinant la première impédance de fréquence et seconde impédance de fréquence acquises.

FIG.1

FIG.2

FIG.3

LOW FREQUENCY BAND
(FIRST FREQUENCY BAND)

ANODE
ELECTRODE
112

ELECTROLYTE
MEMBRANE
111

CATHODE
ELECTRODE
113

Ra

Rm

Rc

ALTERNATING
CURRENT

Ca

Cc

FIG.4A

SECOND FREQUENCY BAND

ANODE
ELECTRODE
112

ELECTROLYTE
MEMBRANE
111

CATHODE
ELECTRODE
113

Ra

Rm

Rc

ALTERNATING
CURRENT

Ca

Cc

FIG.4B

ANODE ELECTRODE RESPONSE FREQUENCY BAND
(THIRD FREQUENCY BAND)

ANODE
ELECTRODE
112

ELECTROLYTE
MEMBRANE
111

CATHODE
ELECTRODE
113

ALTERNATING
CURRENT

FIG.4C

ELECTROLYTE MEMBRANE RESPONSE FREQUENCY BAND
(FOURTH FREQUENCY BAND)

ANODE
ELECTRODE
112

ELECTROLYTE
MEMBRANE
111

CATHODE
ELECTRODE
113

ALTERNATING
CURRENT

FIG.4D

START

S101

ACQUIRE IMPEDANCE AT ONE FREQUENCY IN ELECTROLYTE
MEMBRANE RESPONSE FREQUENCY BAND

S102

ESTIMATE ELECTROLYTE
MEMBRANE RESISTANCE VALUE

S103

ACQUIRE IMPEDANCES AT TWO FREQUENCIES IN ANODE
ELECTRODE RESPONSE FREQUENCY BAND

S104

ESTIMATE ANODE ELECTRODE REACTION RESISTANCE
VALUE AND ANODE ELECTRODE CAPACITANCE VALUE

S105

ACQUIRE IMPEDANCE AT ONE POINT
IN LOW FREQUENCY BAND

S106

ESTIMATE CATHODE ELECTRODE
REACTION RESISTANCE VALUE

END

FIG.5

START

S101
ACQUIRE IMPEDANCE AT ONE FREQUENCY IN ELECTROLYTE
MEMBRANE RESPONSE FREQUENCY BAND

S102
ESTIMATE ELECTROLYTE
MEMBRANE RESISTANCE VALUE

S103
ACQUIRE IMPEDANCES AT TWO FREQUENCIES IN ANODE
ELECTRODE RESPONSE FREQUENCY BAND

S104
ESTIMATE ANODE ELECTRODE REACTION RESISTANCE
VALUE AND ANODE ELECTRODE CAPACITANCE VALUE

S205
ACQUIRE LOW FREQUENCY IMPEDANCE
ON BASIS OF I-V CHARACTERISTIC

S206
ESTIMATE CATHODE ELECTRODE
REACTION RESISTANCE VALUE

END

FIG.6

FIG.7

START

S103

ACQUIRE IMPEDANCES AT TWO FREQUENCIES IN ANODE
ELECTRODE RESPONSE FREQUENCY BAND

S304

ESTIMATE ANODE ELECTRODE REACTION RESISTANCE VALUE,
ANODE ELECTRODE CAPACITANCE VALUE,
CATHODE ELECTRODE CAPACITANCE VALUE
AND ELECTROLYTE MEMBRANE RESISTANCE VALUE

S105

ACQUIRE IMPEDANCE AT ONE
POINT IN LOW FREQUENCY BAND

S106

ESTIMATE CATHODE ELECTRODE
REACTION RESISTANCE VALUE

END

FIG.8

FIG.9

FIG.10A

FIG.10B

START

S103

ACQUIRE IMPEDANCES AT TWO FREQUENCIES IN ANODE ELECTRODE RESPONSE FREQUENCY BAND

S304

ESTIMATE ANODE ELECTRODE REACTION RESISTANCE VALUE, ANODE ELECTRODE CAPACITANCE VALUE, CATHODE ELECTRODE CAPACITANCE VALUE AND ELECTROLYTE MEMBRANE RESISTANCE VALUE

S205

ACQUIRE LOW FREQUENCY IMPEDANCE BASED ON I-V CHARACTERISTIC

S206

ESTIMATE CATHODE ELECTRODE REACTION RESISTANCE VALUE

END

FIG.11

FIG.12

EP 3 240 073 B1

FIG.13

40

FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4640661 B
- JP 2005285614 A
- JP 2009134924 A
- US 2011269046 A1
- JP 2014053182 A
- US 20140295302 A1